(19) Europäisches Patentamt

European Patent Office

Office européen des brevets

(11) **EP 0 746 512 B1**

(12) **EUROPÄISCHE PATENTSCHRIFT**

(45) Veröffentlichungstag und Bekanntmachung des Hinweises auf die Patenterteilung:
**26.08.1998 Patentblatt 1998/35**

(51) Int. Cl.$^6$: **B65D 47/08**

(21) Anmeldenummer: **95909771.8**

(22) Anmeldetag: **23.02.1995**

(86) Internationale Anmeldenummer:
**PCT/EP95/00651**

(87) Internationale Veröffentlichungsnummer:
**WO 95/23097 (31.08.1995 Gazette 1995/37)**

(54) **SCHARNIER**

**HINGE**

**CHARNIERE**

(84) Benannte Vertragsstaaten:
**AT BE CH DE DK ES FR GB GR IE IT LI LU MC NL PT SE**
Benannte Erstreckungsstaaten:
**SI**

(30) Priorität: **23.02.1994 CH 530/94**

(43) Veröffentlichungstag der Anmeldung:
**11.12.1996 Patentblatt 1996/50**

(73) Patentinhaber: **Creanova AG**
**CH-6340 Baar (CH)**

(72) Erfinder:
- **RENTSCH, Rudolf, A.**
  **CH-8703 Erlenbach (CH)**
- **MUELLER, Bruce, M.**
  **Mukwonago, WI 53149 (US)**

(74) Vertreter:
**Ostertag, Reinhard et al**
**Patentanwälte**
**Dr. Ulrich Ostertag**
**Dr. Reinhard Ostertag**
**Eibenweg 10**
**70597 Stuttgart (DE)**

(56) Entgegenhaltungen:
**US-A- 5 148 912**

**Beschreibung**

Die vorliegende Erfindung betrifft eine Scharnieranordnung gemäss dem Oberbegriff des Patentanspruches 1.

Für die gelenkige Scharnierverbindung, insbesondere von einteilig gespritzten Kunststoffverschlüssen, sind verschiedene Konstruktionen bekannt. In der Regel werden bei solchen einstückigen Kunststoffverschlüssen zwei gegeneinander zu verschwenkende Scharnierteile mit einem Hauptscharnier oder mehreren auf einer Achse liegenden Hauptscharnieren (Achsabschnitte) verbunden. Um beim Betätigen des Scharniers einen Schnappeffekt, d.h. spürbare und definierte Öffnungsund Schliesslagen durch Überwindung einer Totpunktlage zu erhalten, ist in der Regel mindestens ein zusätzliches Zwischenelement, Federelement, Spannband oder entsprechende Elemente Vorgesehen. Diese werden seitlich des Hauptscharniers oder im Falle von mehreren Hauptscharnieren zwischen diesen angeordnet und sind mit den beiden Scharnierteilen verbunden. Die Zwischenelemente bzw. Spannbänder werden dabei so angeordnet, dass das Hauptscharnier ausserhalb der durch die Verbindungsstellen der Zwischen elemente mit den Verschlussteilen aufgespannten Ebene(n) liegt. Dieser Versatz des Hauptscharniers gegenüber den Anlenkstellen der Zwischenelemente (Gelenkachsenoffset) führt während des Öffnens und Schliessens des Scharniers zu Zug- und Druckkräften, welche durch die Zwischenelemente und das Hauptscharnier übertragen und aufgenommen werden und den Schnappeffekt bewirken.

Ein solches auf einem Gelenkachsenoffset beruhendes Funktionsprinzip, bei welchem die Scharnierteile um eine definierte, bezüglich der Scharnierteile starr angeordnete Hauptachse schwenken und ergänzende Funktionselemente bezüglich ihren Anlenkstellen an den Scharnierteilen eine geometrische Auslenkung erfahren, sind beispielsweise aus den Patentschriften DE 1813187, EP 0056469, CH 488085, EP 0447357, oder den Patentanmeldungen EP 524275 und DE P 43 35 107.7 vom 14.10.1993 bekannt.

Neben dem allgemein bekannten Problem hoher oder übermässiger Materialbeanspruchungen (Gefahr von Materialrissen oder -brüchen im Scharnierbereich) liegt ein weiterer Nachteil solcher Systeme darin, dass wegen der erforderlichen Hauptfilmscharniere der räumliche Bewegungsverlauf der Scharnierteile stark eingeschränkt ist und die Hauptfilmscharniere wegen des notwendigen Offsets über die Verschlusskontur vorstehen. Die gegenseitige Lage der Scharnierteile in den beiden Ruhelagen, d.h. im geschlossenen und geöffneten Zustand, sowie während der Bewegung ist nicht massgeblich beeinflussbar, da eine reine Achsrotation erfolgt. Zudem bringen die entsprechenden Scharnieranordnungen verschiedene Einschränkungen und Sachzwänge bezüglich der ästhetischen und geometrischen Ausgestaltung der Scharnierteile mit sich. Die Kinematik solcher Konstruktionen wird ausserdem stark durch die konkrete Ausgestaltung der Scharnierteile, des verwendeten Materials und bei Kunststoffspritzgussteilen durch das konkrete Produktionsverfahren, das Werkzeug und durch die Fertigungstoleranzen beeinflusst. Nicht selten entstehen durch solche Sachzwänge nicht materialgerechte Konstruktionen, welche anfällig für Beschädigung in der Fertigung und bezüglich der Lebensdauer im Normalgebrauch sein können.

Eine Konstruktion ohne Hauptscharnier ist aus der US-PS 3,135,456 bekannt. Zwei gegeneinander zu verschwenkende Teile eines Behälters sind dort durch einen auf der Aussenseite angebrachten, gummielastischen Lappen miteinander verbunden. Diese Konstruktion löst das Problem der hohen Materialdehnungen nicht, sondern umgeht es scheinbar, indem gummielastisches, stark dehnbares Material verwendet wird. Das Scharnier ist hohen Materialbelastungen ausgesetzt und weist darüber hinaus ein äusserst instabiles, nicht vorhersagbares grossflächiges Umstülpverhalten auf.

Aus der Europäischen Patentschrift EP 0 331 940 ist eine bistabile Scharniervorrichtung bekannt, welche obigen Nachteilen in massgeblichen Bereichen Rechnung trägt. Diese Scharniervorrichtung vermeidet ein die beiden Scharnierteile direkt verbindendes Hauptscharnier. Die Scharnierteile sind durch zwei gleiche, symmetrische verbindungsarme miteinander verbunden, wobei jeder dieser verbindungsarme zwei Trägerarme (cantilever arms) enthält, welche erstere mit den Scharnierteilen verbinden. Die Trägerarme ihrerseits sind durch eine im wesentlichen dreiecksförmige Platte miteinander verbunden. Die Scharnieranordnung gemäss jener Erfindung zeichnet sich durch einen verhältnismässig grossen Öffnungswinkel und einen überdurchschnittlichen Schnappeffekt aus und führt trotz relativ starrer Konstruktion nicht zu einer übermässigen Beanspruchung des Materials.

Die US-A-5 148 912 beschreibt eine Scharnieranordnung, bei welcher die beiden Scharnierteile über zwei Verbindungsarme miteinander verbunden sind, die über ihre ganze Länge hinweg homogen flexibel bzw. elastisch sind. Aufgrund der kreisrunden Kontur der beiden Scharnierteile erhalten die beiden Verbindungsarme zwangsläufig aber zufällig eine trapezförmige Gestalt. Dieses Scharnier nach dem Stande der Technik weist weder starre Zwischenteile, die Trapezform besitzen, noch Anlenkelemente auf, welche an die Scharnierteile angeformt sind. Das bekannte Scharnier zeigt deshalb auch keinen guten Schnappeffekt. Das heißt: Offen- und Schließstellung sind keine stabilen Positionen der Scharnierteile, in welche diese aus den zwischenliegenden Schwenkpositionen automatisch zurückkehren.

Die WO-A-92 13 775 beschreibt eine Scharnieranordnung, bei welcher die Verbindungsarme aus federartigen Elementen hergestellt sind. Diese zeigen weder trapezförmige Zwischenteile noch an die Scharnierteile angeformte Anlenkelemente. Auch dieses Scharnier nach dem Stande der Technik ist nicht bistabil im oben erwähnten Sinne.

Eine ähnliche Scharnieranordnung ist in der WO-A-84 04 906 beschrieben. Die streifenartigen Verbindungsarme

2

sind hier über ihre gesamte Längsabmessung hinweg flexibel und enthalten keine im wesentlichen starren trapezförmigen Verbindungselemente. Darüber hinaus befinden sich diese Verbindungsarme nicht innerhalb der Außenkontur der Scharnierteile, sind also ästhetisch unbefriedigend. Daß dieses Scharnier keine gute Schnappwirkung zeigt, ist nach dem oben Gesagten evident.

Es ist Aufgabe der vorliegenden Erfindung, eine Scharnieranordnung, insbesondere für einstückige Kunststoffverschlüsse, zu schaffen, die unter Beibehalt der Vorzüge der vorgenannten Erfindung (EP 0 331 940) hinsichtlich Materialbeanspruchungen trotz erweiterten Öffnungswinkeln von über 180° geringere Material-Belastungen aufweist und es erlaubt, den räumlichen Bewegungsablauf gezielt zu steuern und da mit grössere Freiheitsgrade für die Ausgestaltung der Scharnierteile und deren Kinematik zu schaffen.

Diese Aufgabe wird durch die in den Patentansprüchen angegebene Erfindung gelöst.

Beim systematischen Beobachten der Öffnungs- und Schliessbewegung von Kunststoffverschlüssen ohne Hauptachsen-Filmscharnier, wie sie in der vorgenannten EP beschrieben sind, lässt sich eine komplexe räumliche Bewegung erkennen. Trotz gutem bistabilem Verhalten lassen sich die angestrebten Öffnungswinkel von gegen 180° nicht spannungsfrei erzielen, zudem kann man im Totpunkt, beim Übergang von der einen zur andern definierten Position, eine stärkere Dehnung der Verbindungsarme beobachten. Je nach Material ist der Schliesswinkel grösser als 0° und der Öffnungswinkel ziemlich kleiner als 180° (ca. 160°). Dies bedeutet im Langzeitverhalten, dass das Material ausserhalb der beiden definierten Positionen mit Spannungsminimum ständig unter Stress steht, und beim Manipulieren stärkeren Dehnungen ausgesetzt ist, was bei Kunststoffen schliesslich zu Rissbildungen führen kann und dadurch die Lebensdauer eines solchen Verschlusses mindert.

Beobachtet man den Vorgang genau, sieht man, dass der Übergang in die beiden stabilen Lagen von einem, wenn auch geringen Umstülpvorgang im Material begleitet wird. Solche Umstülpvorgänge sind Materialverformungen, die gleichzeitig in allen drei Raumrichtungen ablaufen (wie ein Knackfrosch), was temporär zu einer instabilen Lage führt und so die beiden stabilen Positionen auf beiden Seiten der Stülpung klar trennt. Dazu kommen die konstruktiven Massnahmen in Form von vorgeformten Knickstellen, die den Bewegungsvorgang mitsteuern. Man erkennt, dass trotz exakter Spritzgiesstechnik, mit welcher die "Steuerorgane" eingeprägt werden, es nicht gelingt, die Kräfte ausschliesslich so zu steuern, wie man es gerne möchte. Vagabundierende Kräfte, zum Teil bis ins plastische Verhalten des Materials, bewirken nicht nur unbefriedigende mechanische Eigenschaften, sondern zusätzlich auch die materialerodierenden Phänomene, die natürlich unerwünscht sind.

Vielleicht liegt es daran, dass beim Konstruieren generell die Neigung besteht, möglichst viel zu steuern und zu kontrollieren dass und dadurch eine mögliche, auch zum Ziel führende "Mitarbeit" des Materials nicht erkannt und damit auch nicht zugelassen wird. Anstatt einen solchen kooperativen Aspekt miteinzubeziehen und zu nutzen, zwängt man den ganzen geplanten Bewegungs-Vorgang in (zu) enge Bahnen. Hier setzt nun die Erfindungsidee ein.

Wenn man der Möglichkeit des Einbezugs von Eigenverhalten des Materials Beachtung zukommen lässt, kann man eine ganze Reihe solcher "kooperativer Abläufe" nutzen, dies immer zusammen mit einer flankierenden, aber den Ablauf nicht zu sehr hindernden sondern vielmehr unterstützenden Steuerung des Bewegungsvorganges. Bei solchen Ausführungsformen lässt man das Material, in den bevorzugten Ausführungsformen den Kunststoff, sich dorthin bewegen, wo er hinzubewegen neigt, und ordnet Steuerungsmassnahmen erst dort an, wo man eine gezielte Bewegung vorgesehen hat. Durch diesen Spielraum zwischen starrer Lenkung und sanfter Führung werden unnötige Spannungen vermieden.

Auf diese Weise wird der räumliche Bewegungsablauf durch konstruktive Mittel gezielt und nichthindernd gesteuert, und es werden dadurch gemäss Aufgabenstellung grössere Freiheitsgrade für die Ausgestaltung der Scharnierteile geschaffen. Die erfindungsgemässe Lehre überwindet dadurch bisherige Limitierungen und ermöglicht bei zulässigen Materialbelastungen unter anderem Öffnungswinkel von bis zu 270° oder gar tristabile Scharniere.

Anhand der unten aufgeführten Diagramme und Figuren werden nun konstruktive Erwägungen und Ausführungsbeispiele der Erfindung näher erläutert. Figur 1 und die Diagramme der Figuren 2 bis 5 führen in grundsätzliche Betrachtungen zum Verständnis der Erfindung ein.

Fig. 1          zeigt den grundsätzlichen Bewegungsablauf bzw. die Geometrie einer Verschlusskappe mit Gelenkachsenoffset.

Fig. 2 bis 5          zeigen in Diagrammen Funktionen wie Öffnungswinkel und Dehnungen in Abhängigkeit von konstruktiven Massnahmen. Die Parameter sind, wie in Figur 1 gezeigt, L1, L2 und d.

Fig. 6          zeigt in prinzipieller Darstellung ein erstes Ausführungsbeispiel eines einteiligen Kunststoffverschlusses mit parallel angeordneten Verbindungsarmen 5 und Asymmetrie bezüglich einer Ebene bei geschlossenem Verschluss.

Fig. 7          eine vergrösserte, schematische Darstellung der Verbindungsarme 5 zwischen den beiden Verschluss- bzw. Scharnierteilen.

Fig. 8      zeigt das Ausführungsbeispiel im aufgeklappten Zustand. Man schaut in das Innere des Deckels und des Behälters.

Fig. 9      zeigt den einen Verbindungsarm 5.1 des aufgeklappten Scharniers von der in Figur 8 angezeigten Seite und

Fig. 10      zeigt den anderen Verbindungsarm 5.2 des aufgeklappten Scharniers von der in Figur 8 angezeigten Seite.

Fig. 11      zeigt die beiden Verbindungsarme 5.1 und 5.2 des aufgeklappten Scharniers von der in Figur 8 angezeigten Seite.

Fig. 12      zeigt das Ausführungsbeispiel von Figur 8 in zugeklapptem Zustand. Man schaut von innen her an das Scharnier, nicht von der Rückseite wie in Figur 6.

Fig. 13      zeigt die erfindungsgemässe Entlastungsbewegung anhand eines schematisch dargestellten Ausführungsbeispiels.

Fig. 14 bis Fig. 19      zeigen weitere Ausführungsformen der Verbindungsarme 5.1 und 5.2 aus der Sicht wie in Figur 12.

Fig. 20      zeigt in schematischer Darstellung den Bewegungsablauf eines Ausführungsbeispiels mit asymmetrisch verlaufenden Biegebereichen 9, 10.

Fig.21a-21d      zeigen verschiedene Ausführungsformen von Anlenkelementen 6, 7.

Fig. 22      zeigt ein Ausführungsbeispiel eines Verbindungsarms 5 in detaillierter, dreidimensionaler Darstellung.

Fig. 23      zeigt ein Ausführungsbeispiel für die Abdichtung des Scharnierbereichs für einen Verschlussdeckel.

Fig. 24      zeigt einen Schnitt durch den Steg 15 gemäss Fig. 23 entlang einer Schnittlinie B-B.

Fig. 25      zeigt ein Ausführungsbeispiel mit geringer Höhe des Verschlussdeckels.

Fig. 26-29      weitere Ausführungsbeispiele der Erfindung.

In den folgenden Ausführungsbeispielen wird die Erfindung am Beispiel von einstückigen Verschlüssen aus Kunststoff näher erläutert. Die dabei angestellten Betrachtungen und Erklärungen können selbstverständlich ohne weiteres auf andere Anwendungen bder Materialien, insbesondere auf kartonartige Materialien, übertragen werden. Bei solchen Kunststoffverschlüssen werden die beiden Scharnierteile durch den Verschlusskörper bzw. Verschlussunterteil sowie den Verschlussdeckel gebildet.

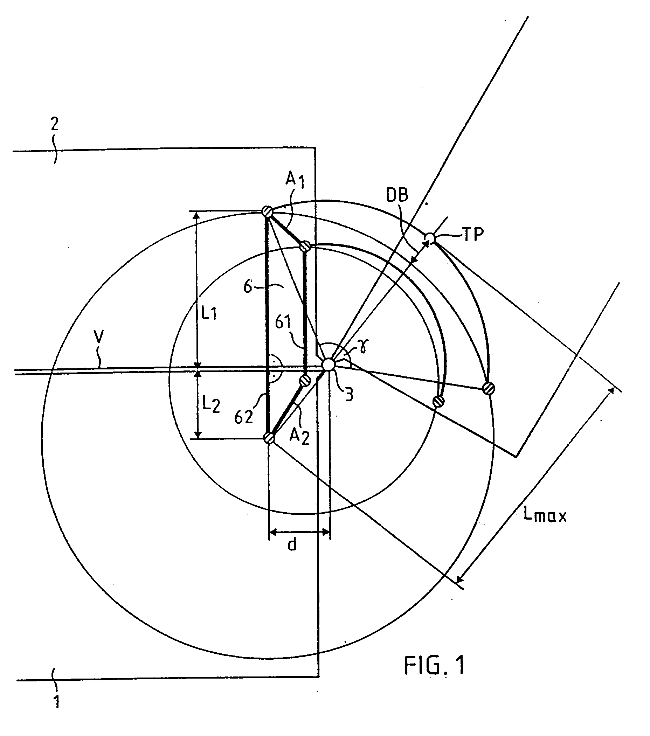

Figur 1 zeigt einen Teil eines grundsätzlich herkömmlichen Verschluss mit Gelenkachsenoffset in starker Vergrösserung von der Seite gesehen. Das Hauptfilmscharnier 3, welches den Verschlusskörper 1 und Verschlussdeckel 2 verbindet, steht senkrecht zur Zeichnungsebene. Ein Zwischenelement 61 (bei gewissen Verschlüssen Spannband genannt) ist hier, und das ist neu, asymmetrisch zur Verschlussebene V angeordnet. Versteht man das Zwischenelement 61 als ein "Bündel von parallelen Fasern", so besteht jede Faser zwischen Ansatzstellen $A_1$ und $A_2$ aus einem oberen Abschnitt $L_1$ (Verschlussabschnitt) und einem unteren Abschnitt $L_2$ (Verschlusskörperabschnitt). Jede Faser besitzt einen bestimmten Abstand d zum Hauptfilmscharnier 3. Diese Parameter $L_1$, $L_2$ und d sind für die Aussenkante 62 des Zwischenelementes 61 in Fig. 1 dargestellt.

Die durch das Gelenkachsenoffset-Prinzip erforderliche Dehnung (je nach konkreter Konstruktion auch Stauchung) des Materials erreicht ihr Maximum im Totpunktbereich. Da das Verhältnis $L_1/L_2$ variieren kann (vergleiche die Steigung der Ansatzstellen $A_1$ und $A_2$), müsste man die Dehnung und den Öffnungswinkel $\gamma$ für jede Faser einzeln berechnen. Dies ist jedoch für die grundsätzlichen Überlegungen an dieser Stelle nicht notwendig. Für eine vereinfachte Betrachtung von Dehnung und Öffnungswinkel $\gamma$ genügen die Parameter der Abschnittslängen $L_1$, $L_2$ und der

Achsen-Offset d. In der Praxis betragen diese Parameter in der Regel:

$L_1$ maximal = $L_2$ maximal = ca. 3 mm (beim Stand der Technik immer symmetrisch) und d = ca. 1 mm.

Das sind übliche Masse einer Verschlusskappe dieser Art.

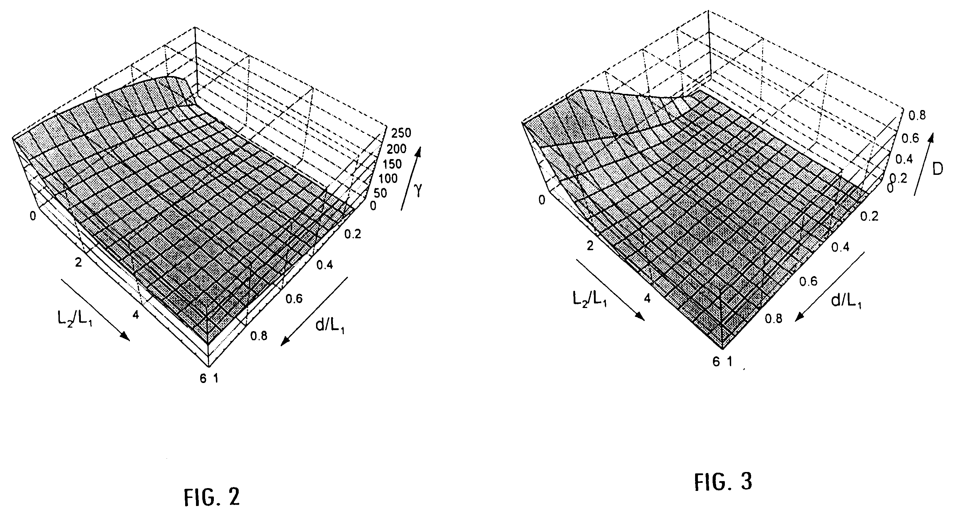

In der Folge werden anhand der Figuren 2 bis 5 einige Diagramme diskutiert, welche auf Belastungsfälle nach Variierung der im Zusammenhang mit Figur 1 diskutierten Parameter eingehen. Zur darstellungsmässigen Vereinfachung ist $L_1$ stets auf den Wert 1 normiert. Die beiden anderen Parameter $L_2$ und d sind also im Verhältnis zu $L_1$ angegeben.

Im Diagramm von Figur 2 wird der Öffnungswinkel $\gamma$ des Verschlusses gemäss Figur 1 in Abhängigkeit der Parameter dargestellt. $L_2$ variiert von 0 $L_1$ bis 6 $L_1$ und d variiert von 0 $L_1$ bis $L_1$. Die als Fläche dargestellte Funktion zeigt, dass bei zunehmendem Gelenkachsen-Offset d und bei möglichst kleinem Abschnitt $L_2$ theoretisch ein maximaler Öffnungswinkel resultiert, der, wenn $L_2/L_1$ gegen 0 strebt ($L_2$ strebt gegen Null), theoretisch bis ca. 250° betragen kann. Da bis anhin mit grosser Mühe Öffnungswinkel von deutlich weniger als 180° erreicht werden, besteht hier noch ein Potential, das nach Lehren gemäss bisherigem Stand der Technik grundsätzlich noch ausgeschöpft werden kann. In diese Richtung weisen Prinzipien mit formelastischen Spannbändern (vgl. die deutsche Patentanmeldung Nr. P 43 35 107.7).

Das Diagramm von Figur 3 zeigt die Faserdehnung im Totpunkt, das ist gleichzeitig die maximale Faserdehnung. $L_2$ variiert wiederum von 0 bis 6 $L_1$ und d von 0 bis $L_1$. Die Funktion zeigt, dass bei erwünschtem, grossen Öffnungswinkel, d.h. bei kleinem Abschnitt $L_2$, schon bei einem kleinen Offset d Faserdehnungen von 40% und mehr vorkommen. Ein Vergleich der beiden Diagramme zeigt, dass die maximalen Dehnungen ausgerechnet in dem Bereich auftreten, wo der gewünschte Öffnungswinkel optimal wäre. Schaut man diesen interessanten Bereich genauer an, so erkennt man folgendes:

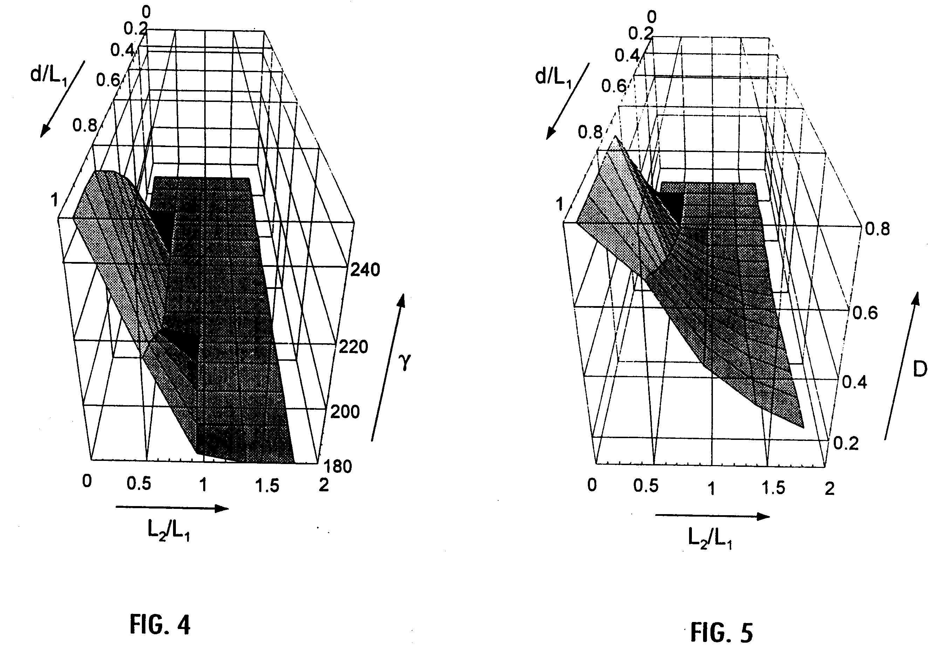

Das Diagramm von Figur 4 zeigt nun den Öffnungswinkel $\gamma$ in Abhängigkeit der Parameter nur für den Bereich bei Öffnungswinkeln von grösser als 180°, d.h. dargestellt ist der Bereich von 180° bis 250°. $L_2$ variiert von 0 bis ca. 2 $L_1$ und d variiert von 0 bis $L_1$. Die Fläche der resultierenden Funktion zeigt hier recht gut, wie eng der konstruktive Bereich wird, je grösser der Öffnungswinkel sein soll und was für hohe Dehnungen dabei resultieren, was im folgenden Diagramm gezeigt ist.

Im Diagramm von Figur 5 wird die Faserdehnung in Funktion von $L_1$ und d gezeigt, wobei der gleiche Bereichsausschnitt wie in Diagramm von Figur 4 dargestellt ist. Daraus wird ersichtlich, dass Dehnungen im interessierenden Bereich, d.h. $\gamma > 180°$, über 30% liegen und für Öffnungswinkel von 200° und mehr sogar bis gegen 80% betragen. Dies lässt erkennen, dass tatsächlich nur ein sehr enger (theoretischer) Bereich für herkömmliche Lösungen zugänglich ist. Wie man sehen kann, resultiert bei einer eigentlich schon unzulässig grossen Dehnung von 30% ein beschränkter Öffnungswinkel von nur noch 180° und weniger. Also muss man Konstruktionen meiden, die zu solchen Dehnungen führen, und eine Formgebung suchen, bei welcher ne ben konstruktiven Massnahmen die Kooperation des Materials zur Erreichung des Zieles mitbenutzt wird. Bereits die Europäische Patentschrift EP 0 331 940 zeigt einen Weg auf, wie man die Beschränkungen des herkömmlichen Prinzips mit Gelenkachsenoffset ansatzweise umgehen kann. Die Lösung nach EP 0 331 940 basiert jedoch stark auf reinen geometrischen Umstülpvorgängen, welche der Verschlusskinematik wenig Freiheitsgrade einräumen.

Mit den obigen Kenntnissen ist man genügend in die Problematik eingeführt, um zu sehen, wo die Barrieren des Standes der Technik sind. Wo und wie man sie überwindet, wird anhand eines ersten Ausführungsbeispiels gezeigt.

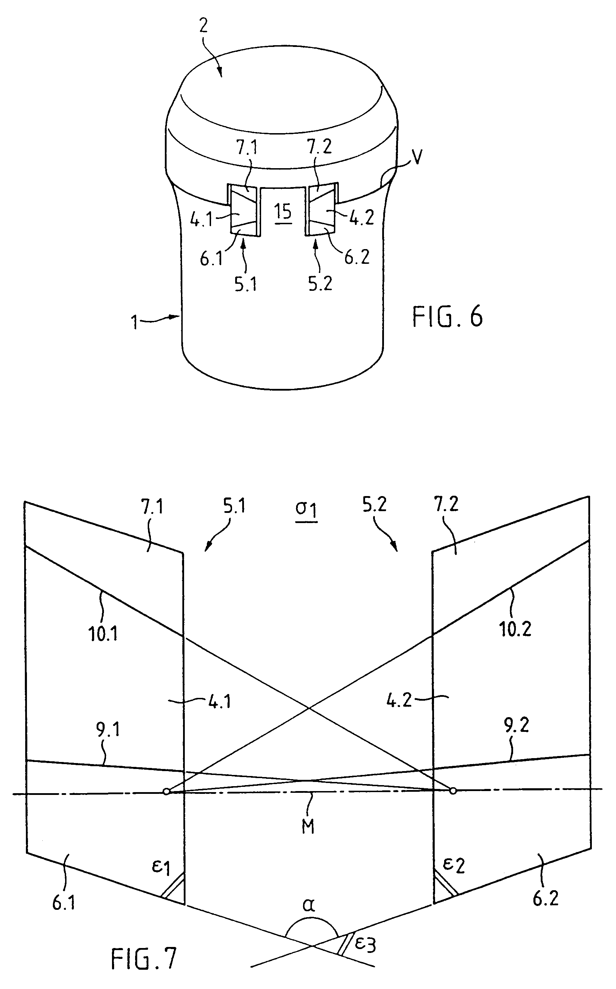

Figur 6 zeigt einen einteilig im Spritzgiessverfahren herstellbaren Kunststoffverschluss, der bspw. aus Polypropylen (PP) spritzgegossen wird. Als Kunststoffe kommen für die Erfindung im allgemeinen Polymere, insbesondere Thermoplaste, mit oder ohne die üblichen Zusätze und/oder Füllstoffe in Frage, die sich zu flexiblen zähen Folien mit Dicken von typisch 50-2000 $\mu$m formen lassen und in dieser Form biegebeständig sind. Der Verschluss besitzt einen Verschlusskörper 1 und einen Verschlussdeckel 2, welche hier die beiden Scharnierteile bilden. Der Verschluss ist im geschlossenen Zustand dargestellt, d.h. der Deckel 2 liegt dem Verschlusskörper 1 im Bereich der Schliessebene V an. Der Verschlusskörper 1 und der Deckel 2 sind einzig über zwei Verbindungsarme 5.1 und 5.2 verbunden, die vorzugsweise in Nischen angeordnet werden. Die Scharnieranordnung gemäss der Erfindung kann somit ohne irgendwelche über die Verschlusskontur hinausragende Teile ausgebildet werden. Zwischen den beiden Verbindungsarmen 5.1, 5.2 liegt im Gegensatz zu bekannten Scharnieranordnungen mit einem Hauptscharnier und Gelenkachsenoffset, kein zusätzliches Scharnier, welches die Verschlussteile 1, 2 verbinden würde. Dies erlaubt es, den Verschlusskörper 1 bspw. mit einem nach oben überragenden Steg 15 auszubilden. Der Deckel 2 besitzt entsprechende Aussparungen, die dem Steg 15 im geschlossenen Zustand dicht anliegen. Dieser Steg 15 bewirkt eine Führung für den Deckel 2 und kann gezielt für die üblicherweise (hier verdeckte) Ausgussöffnung im Innern des Verschlusses eingesetzt werden. Es ist leicht ersichtlich, dass der Steg 15 breite Gestaltungsmöglichkeiten offen lässt um eine pass- und führungsgenaue Positionierung des Deckels 2 herbeizuführen. Besonders bevorzugt sind auch nach oben konvexe Formen, welche ein Verkanten des Deckels 2 beim Verschliessen unmöglich machen. Ganz deutlich ist in dieser Figur zu sehen, dass die Scharnieranordnung ohne Hauptfilmscharnier ausgestaltet ist. Die vorliegende Erfindung vermeidet gezielt eine Verbindung der beiden Verschlussteile durch eine geometrische bzw. physische Hauptachse, welche die Deckelbewegung in der Weise einschränken würde, dass den einzelnen Punkten der zu bewegenden Scharnierteile eine Kreisbahn-Bewegung aufgezwungen würde.

Die beiden Verbindungsarme 5.1 und 5.2 enthalten je ein unteres Anlenkelement 6.1, 6.2, welches mit dem Verschlusskörper 1 verbunden ist, sowie je ein oberes Anlenkelement 7.1, 7.2, das je mit dem Deckel 2 verbunden ist. Die oberen und unteren Anlenkelemente 6.1, 6.2 und 7.1, 7.2 sind je über einen im wesentlichen biegesteifen Zwischenteil 4.1, 4.2 verbunden. Erfindungsgemäss sind die Anlenkelemente 6, 7 so wie die Zwischenteile 4 derart ausgestaltet, dass sie einerseits Torsionsbeanspruchungen der Verbindungsstellen zwischen Schwenkelement und Anlenkelement möglichst gering halten, andererseits eine gezielte, d.h. zielgerichtete Be wegung (Steuerung) der Verschlussteile bei Öffnungs- und Schliessbewegung herbeiführen.

In Figur 7 sind die beiden Verbindungsarme 5.1, 5.2 stark vergrössert dargestellt. Die beiden Verbindungsarme sind hier vereinfacht - unter Vernachlässigung ihrer Dicke und/oder Krümmung - als zwei schräg zueinanderstehende Rechtecke dargestellt, die in zwei in einem Winkel $\alpha$ zueinander angeordnete Ebenen $\varepsilon_1$ und $\varepsilon_2$ liegen. In diesem Ausführungsbeispiel sind die beiden Verbindungsarme 5.1, 5.2 bezüglich einer senkrecht zur Zeichenebene liegenden Symmetrieebene $\sigma_1$ symmetrisch ausgestaltet. Demgegenüber besteht hier hinsichtlich der Längsrichtung der Verbindungsarme keine Symmetrie. Das untere Anlenkelement 6.1, 6.2 und das obere Anlenkelement 7.1, 7.2 jedes Verbindungsarmes besitzen eine abweichende Form. Im Gegensatz zur oben diskutieren Konstruktion nach EP 0 331 940, welche mit Dreiecksformen und symmetrischen Anordnungen arbeitet, besitzen hier sowohl die Anlenkelemente 6, 7 als auch die Zwischenteile 4 eine trapezförmige Gestalt. Die trapezförmige, vorzugsweise asymmetrische Ausgestaltung führt nun dazu, dass die Bewegungsvorgänge nicht ein geengt werden. Es wird erfindungsgemäss nicht angestrebt, die Verschlusskinematik auf Umstülpungen einzuschränken, sondern vielmehr werden durch die trapezförmige Ausgestaltung die Materialeigenschaften bewusst inkooperiert und insbesondere zur Aufnahme von Torsions- und Biegekräften benutzt. Zwischen den Anlenkelementen 6, 7 und den Zwischenteilen 4 sind vorzugsweise geradlinige Biegebereiche 9.1, 9.2 bzw. 10.1, 10.2 vorgesehen. Diese Biegebereiche 9, 10 werden bevorzugt als Gelenkstellen (flächen- oder linienhafte Biegebereiche), z.B. als gelenkartige Dünnstellen, bei Scharnieren aus Kunststoff insbesondere als Filmscharniere, ausgebildet; sie bilden jedoch wie erläutert nur einen wesentlichen Teil der Steuerelemente. Die hier nicht dargestellte Schliessebene (vgl. Fig. 1) steht senkrecht zur Symmetrieebene $\sigma_1$. Eine weitere, zur Schliessebene parallele Ebene ist hier mit $\varepsilon_3$ markiert. Gemäss der Erfindung werden die Verbindungsarme so ausgebildet, dass unter Beizug der Materialeigenschaften eine gezielte Auslenkbewegung der Verbindungsarme im Mittenbereich herbeigeführt wird, so dass übermässige Materialbeanspruchungen, insbesondere unzulässige Dehnungen, reduziert oder vermieden werden. Die ungleiche Ausgestaltung der Anlenkelemente 6, 7 führt zu einer virtuellen Drehachse, die sich im wesentlichen auf Höhe der Linie M befindet, die durch die Schnittpunkte der Biegebereiche 9.1, 10.1 bzw. 9.2, 10.2 definiert wird. Es soll hier betont werden, dass diese virtuelle Drehachse nicht mit einer geometrischen oder gar physischen Hauptachse verwechselt werden darf, da sich während des komplexen dreidimensionalen Bewegungsvorgangs diese virtuelle Drehachse kontinuierlich bewegt. Dieses Auslenk- und Entlastungsprinzip soll im folgenden anhand verschiedener Ausführungsbeispiele der Erfindung erläutert werden.

Die Anlenkelemente 6 und 7, die trennenden Biegebereiche 9 und 10 und die dazwischen angeordneten Zwischenteile 4 bieten eine grosse Variation konstruktiver Ausgestaltung. Je nach Lage, Länge und Winkel bilden sie zusammen "Bewegungseinheiten", die trotz grossem Öffnungswinkel und definierter Offen- und Schliesslage nur wenig Spannung und damit geringe Dehnung aufweisen. Wenn im folgenden von Dehnung gesprochen wird, so wird davon ausgegangen, dass sich die Ausführungen selbstverständlich auch auf entsprechende Stauchungen beziehen, die je nach konstruktiver Gestaltung von Scharnieren auftreten. Die Kooperation des Materials ist darin zu sehen, dass Elaziziäten in mehreren Richtungen nacheinander, wie Schritt für Schritt, im Zusammenspiel der Bewegung beider Verbindungsarme ausgenützt werden. Die Biegebereiche 9, 10 unterstützen die definierte Bewegung der Scharnieranordnung und konzentrieren im wesentlichen Umstülpvorgänge auf diese Bereiche. Die übrigen Teile der Verbindungsarme 5 werden nur geringfügig oder gar nicht umgestülpt bzw. umgebogen. Die trapezförmigen Ausgestaltungsvariationen gemäss der Erfindung führen zu Möglichkeiten und einer Kinematik, die gegenüber bekannten Lösungen neue Möglichkeiten eröffnet. Die erfindungsgemässe Lehre ermöglicht unter anderem Öffnungswinkel von bis zu 270° oder gar Verschlüsse mit mehreren stabilen Lagen, wie dies weiter unten erläutert ist. Dies im Gegensatz zu den bekannten Spannbändern oder der Konstruktion gemäss EP 0 331 940 mit dreieckigen Elementen und zwei Gelenklinien (folding lines). Die Erfindung ermöglicht somit mehrere stabile Schwenkpositionen eines ersten scharnierteils gegenüber einem zweiten Scharnierteil, wobei in der Regel je zwischen zwei solchen stabilen Schwenkpositionen ein Totpunkt liegt. Im Sinne der Erfindung wird somit nicht nur angestrebt, dass zwei (oder mehr) stabile Schwenkpositionen erzielt werden, sondern dass die Scharnierteile von jeder Schwenkpositionen von solchen derart vorgesehenen Totpunkten immer federnd in eine der stabilen Schwenkpositionen zurückkehren. Es wird mit anderen Worten nicht nur eine Mehrstabilität, sondern die Kombination von Mehrstabilität mit einem Feder- bzw. Schnappeffekt bezweckt.

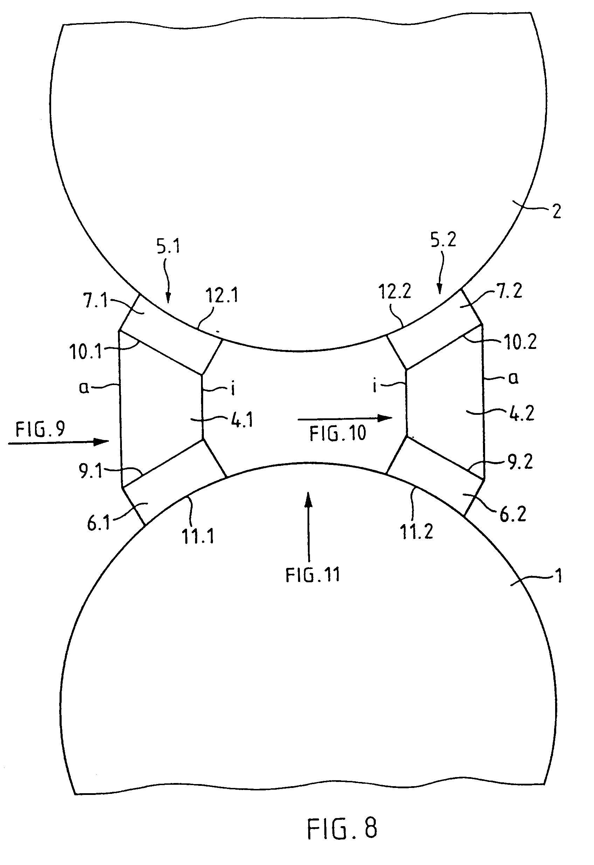

Figur 8 zeigt ein Ausführungsbeispiel in 180° aufgeklapptem und weitgehend spannungsfreiem Zustand. Man schaut in das Innere des Deckels und des Behälters. Verschlusskörper 1 und Verschlussdeckel 2 sind über die beiden Verbindungsarme 5.1 und 5.2 miteinander verbunden. Zum Schliessen würde man nun den Verschlussdeckel 2 aus der Papierebene herausklappen. Die beiden Verbindungsarme stehen wie zwei Brückenbogen aus der Papierebene heraus. Je nach Länge der Anlenkelemente 6, 7, welche nicht gleich lang sein müssen, und je nach Winkelstellung der Gelenkstellen oder Biegebereiche 9,10 und je nach Länge der Verbindungsstücke 4, verhält sich das Scharnier beim Öffnen und Schliessen anders. Angedeutet sind zudem zusätzliche Biegebereiche 11.1, 11.2, 12.1, 12.2, welche hier den weiten, spannungsfreien Öffnungs zustand ermöglichen.

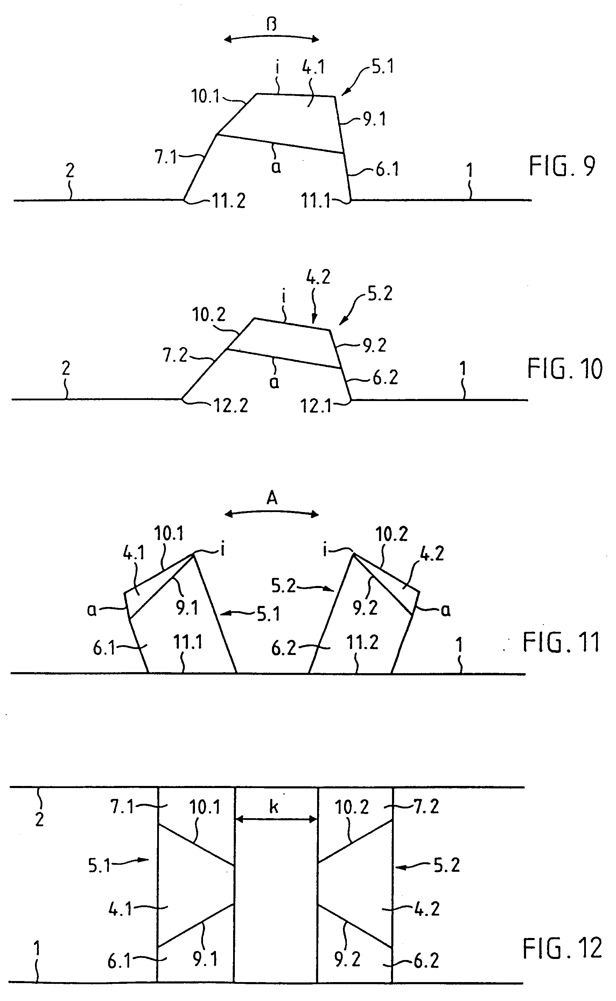

Figur 9 zeigt den einen brückenbogenartig aufgestellten Verbindungsarm 5.1, dessen trapezförmigen Zwischenteil 4. 1 dem Betrachter so zugeneigt ist, dass er dieselbe Oberfläche sieht, wie in Figur 8, während der andere Verbindungsarm 5.2 in Figur 10 so zum Betrachter steht, dass er die ihm zugeneigte untere Seite des Zwischenteil 4.2 sieht. Mit dem Bogen $\beta$ wird die Schliess- und Öffnungsbewegung angezeigt. Figur 11 zeigt die beiden Verbindungsarme 5, wie sie sich dem Betrachter zeigen, wenn er zwischen ihnen durchschaut. Man erkennt, dass sie, wegen der schräg zueinander ver laufenden Biegebereiche 11.1, 11.2 (bzw. 12.1, 12.2) zueinander seitlich geneigt sind. Ein mit A bezeichneter Doppelpfeil soll eine Bewegung quer zur mit $\beta$ in Figur 9 bezeichneten Öffnungs- und Schliessbewegung anzeigen. Diese mit A bezeichnete Bewegung könnte man am besten mit einer (hier seitwärts wirkenden) Totpunktdehnung-Entlastungsbewegung bezeichnen. Während die Spannbänder gemäss Stand der Technik lediglich gezogen werden und so wie eine in eine Richtung wirkende Feder wirken, machen die Verbindungsarme 5.1 und 5.2 eine gegenseitig interaktive Entlastungsbewegung, die durch die Anlage der Biegebereiche 9 und 10 und durch die Längengebung der Anlenkstellen 6 und 7 und/oder mittels zusätzlicher Biegebereiche 11, 12 in einem weiten Rahmen gesteuert werden kann. Die Erfindung sieht somit besondere dehnungsentlastende Mittel bei den Anlenkelementen (bzw. an deren Übergängen) vor, welche die erforderliche Entlastungsbewegung bewirken.

Man erhält, auf diese Weise vorgehend, Öffnungswinkel über 200° mit spannungsfreien Endpositionen und Dehnungen unter 10%, lediglich die Gegenkraft der gebogenen Filmscharniere der Verbindungsstellen muss aufgebracht werden, elastischer Zug bzw. Druck in den Verbindungsarmen ist von untergeordneter Bedeutung. Es sind durch asymmetrische Ausgestaltung der Verbindungsarme 5 (Asymmetrie bezüglich der Ebene $\sigma_1$, vgl. Fig. 7) auch Versetzungen der Schwenkbewegung möglich, so dass die Verschlusskappe schräg nach der Seite wegklappt. Ein besonderer Vorteil der Erfindung liegt darin, dass das Mass der Entlastungsbewegung und dadurch der Schnappeffekt beeinflusst werden kann. Da die Geometrie der Verschlussteile 1, 2 darauf keinen Einfluss hat, erreicht man eine gezielte, vorhersagbare Verschlusskinematik und einen gewünschten Federeffekt.

Figur 12 zeigt das Ausführungsbeispiel von Figur 8 in zugeklapptem Zustand. Man schaut von innen her an das Scharnier, nicht von der Rückseite wie in Figur 6. Trotz der in den Figuren 8 bis 11 erwähnten komplexen räumlichen Bewegungen sind die beiden Verbindungsarme 5.1 und 5.2 im geschlossenen Zustand hier lediglich gerade Verbindungen im Abstand k, die somit wie zwei gewöhnliche Spannbänder angeordnet werden können. Beim Aufklappen schnappen diese Verbindungsarme ohne grosse Spannung aber mit deutlichem Schnappeffekt in die Brückenbogenform, wie in den Figuren 9 und 10 gezeigt, wobei die Ausgleichsbewegung gemäss Figur 11 die Über-Spannung im Totpunkt während der Öffnungs- und Schliessbewegung seitlich ableitet. Diese Wirkung wird durch die erwähnten zusätzlichen Biegebereiche 11, 12 gezielt unterstützt.

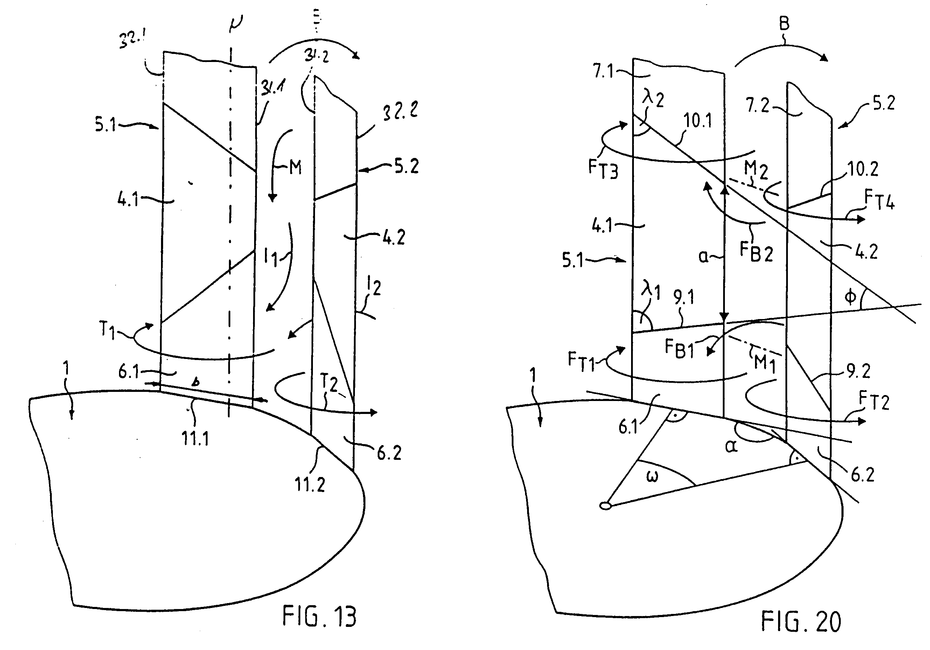

Anhand von Figur 13 soll die erwähnte Totpunktdehnung-Entlastungsbewegung ein gehender erläutert werden. An einem schematisch angedeuteten Verschlussunterteil 1 setzen Zwei Verbindungsarme 5.1, 5.2 an, die hier ebenfalls nur schematisch flächig gezeichnet sind. Für das Verständnis der Entlastungsbewegung sind die dehnungsentlastenden Elemente, hier die beiden Anlenkelemente 6.1, 6.2, von Bedeutung. Werden die Verbindungsarme 5.1, 5.2 von der hier dargestellten Lage (Verschluss geschlossen) gegen aussen in Richtung des Pfeiles B verschwenkt, so besteht im Mittenbereich M an den beiden Verbindungsarmen eine spannungsbedingte stauchwirkung, welche der an den Aussenkanten der Verbindungsarmen auftretenden Dehnung entgegenwirkt. Die Zwischenteile 4.1, 4.2, welche im Vergleich zu den Anlenkelementen 6, 7 biegesteif sind, besitzen in der Folge im Mittenbereich M die Tendenz, in Richtung der Pfeile $l_1$ und $l_2$ gegen das Innere des Verschlusses auszuweichen. Wird nun diese Bewegung verhindert, wie dies insbesondere bei herkömmlichen Verschlüssen mit Gelenkachsenoffset der Fall ist, so entstehen vor allem an den Aussenkanten der Zwischenteile 4.1, 4.2 bzw. der Verbindungsarme 5.1, 5.2 Dehnungen, die in den anhand von Figur 2-5 erläuterten Dimensionen liegen.

Erfindungsgemäss wird nun vorgesehen, dass die Anlenkelemente 6.1, 6.2 (bzw. die in dieser Figur nicht gezeigten oberen Anlenkelemente 7.1, 7.2) eine Entlastungsbewegung ausführen. Wie aus Figur 13 ersichtlich ist, treten nicht nur gegen die Verschlussachse wirkende Kräfte in Richtung der Pfeile $l_1$, $l_2$ auf, sondern auch Torsionskräfte in Richtung der Pfeile $T_1$ und $T_2$. Der allgemeine Spannungszustand der Anordnung besteht aus einer Überlagerung von Zug-, Biege- und Torsionsspannungen. Die Erfindung führt dazu, dass mittels einer Entlastungsbewegung, welche sowohl Torsions- als auch radial wirkende Kräfte im Mittenbereich M auffängt, die schädlichen, in Längsrichtung der Verbindungsarme 5.1, 5.2 wirkenden Dehnkräfte reduziert oder ausgeglichen werden. Die zur Entlastungsbewegung erforderlichen Mittel werden durch die zusätzlichen Biegebereiche 11, 12 und/oder die Ausgestaltung der Anlenkelemente 6.1, 6.2 (Materialkooperation, Geometrie) gebildet. Auf diese Weise wird erreicht, dass jedes Anlenkelement bei der Relativverschwenkung eines zweiten Scharnierteils gegenüber dem ersten Scharnierteil zwischen zwei stabilen, einen Totpunkt einschliessenden Schwenkpositionen im Bereich des maximalen Totpunkts eine elastische Entlastungsbewegüng ausführt.

Werden die dehnungsentlastenden Elemente so ausgebildet, dass die Materialspannungen durch die Entlastungsbewegung weitgehend eliminiert werden, so reduzieren sich die Federkräfte und der Schnappeffekt wird abgeschwächt. Im Mittenbereich M stehen die Druckkanten 31.1, 31.2 der Verbindungsarme 5.1, 5.2 unter Druck. Demgegenüber werden die äusseren Zugkanten 32.1, 32.2 auf Zug beansprucht. Die erfindungsgemässe Ausgestaltung der Scharnieranordnung führt nun dazu, dass während den Öffnungs- und Schliessbewegungen ein neutraler Bereich N (keine oder minimal ste Druck- und Zugkräfte), der hier nur für den Verbindungsarm 5.1 dargestellt ist, im Innenbereich der Verbindungsarme 5 gegeben ist. Wie aus Figur 13 ersichtlich ist, liegt dieser Bereich weit in Richtung auf die Mitte des Verbindungsarmes 5.1. Vorzugsweise werden die Anlenkelemente so ausgestaltet, dass der neutrale Bereich N im mittleren Drittel der Verbindungsarme 5 liegt. Dadurch wird ein ausgeglichenes Spannungsprofil über die Breite b der Verbindungsarme erzielt und es werden wie beschrieben schädliche Materialbelastungen verhindert. Vorzugsweise werden somit die dehnungsentlastenden Elemente, z.B. die zusätzlichen Biegebereiche 11, 12, in Abhängigkeit von Material und Geometrie so ausgebildet, dass die Materialdehnungen in optimierten Bereichen liegen, so dass der Schnappeffekt deutlich spürbar ist, jedoch keine Über-Spannung auftritt.

Die nachfolgenden Figuren zeigen einige bevorzugte konstruktive Beispiele, jeweils aus der Sicht von Figur 12 dargestellt. Sie stammen aus einer methodischen Vielfalt von Variationen, welche unterschiedliche Belastungsresultate und Kraftflüsse aufweisen und so jeweils andere Eigenschaften zeigen, die bedarfsgemäss genützt werden können.

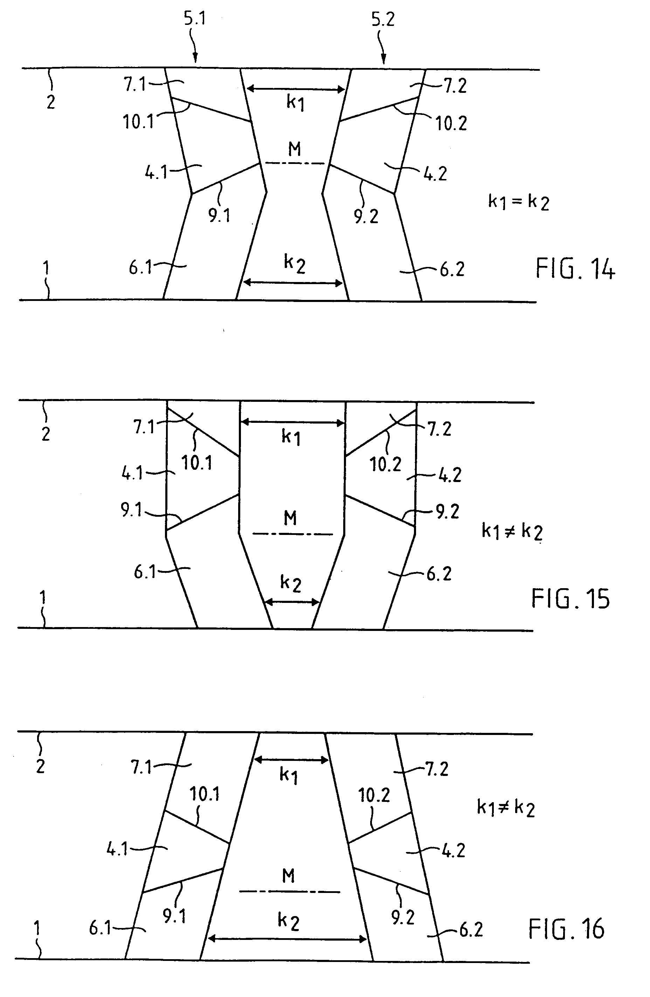

Figur 14 zeigt eine Ausführungsform mit nach innen gewinkelten Verbindungsarmen 5.1, 5.2. Die Abstände $k_1$, $k_2$ der Ansatzstellen an den beiden Elementen 1 und 2 sind hier gleich. Die Biegebereiche 9, 10 sind auf einer Seite der Knickung angeordnet. Beim Auf- und Zuklappen schwenkt der Deckelteil 2 im wesentlichen in der Höhe M zwischen die beiden Verbindungsarme und stellt sich spannungsfrei auf einen Öffnungswinkel grösser 200° ein. Ausserdem kann man beobachten, dass die Spannungsausgleichsbewegung besonders gross wird, was bei gewissen Materialien von Vorteil ist. In dieser Ausführungsform entfallen zusätzliche Biegebereiche 10.1, 10.2, 11.1, 11.2, da die schräg angeordneten Anlenkelemente 6.1, 6.2, 7.1, 7.2 gute Torsions- und Biegeeigenschaften aufweisen und so übermässige Materialspannungen vermeiden.

Figur 15 zeigt eine Ausführungsform mit nach aussen gewinkelten Verbindungsarmen. Die Abstände $k_1$, $k_2$ der Ansatzstellen an den beiden Elementen 1 und 2 sind ungleich. Die Biegebereiche 9, 10 sind wiederum auf einer Seite der Knickung angeordnet. Beim Auf- und Zuklappen schwenkt der Deckelteil 2 mit einer ausreichend grossen Spannungsausgleichsbewegung in der Höhe M zwischen die beiden Verbindungsarme und stellt sich im wesentlichen spannungsfrei auf einen Öffnungswinkel grösser 200° ein.

Figur 16 zeigt eine Ausführungsform mit nach aussen gestellten Verbindungsarmen. Die Abstände $k_1$, $k_2$ der Ansatzstellen an den beiden Elementen 1 und 2 sind ungleich, $k_1 < k_2$. Beim Auf- und Zuklappen schwenkt der Deckelteil 1 in der Höhe M zwischen die beiden Verbindungsarme und stellt sich auf einen Öffnungswinkel von ungefähr 180° ein. Die Spannungsausgleichsbewegung ist kleiner als bei den obigen Ausführungsformen, doch ausreichend genug. Im umgekehrten, nicht dargestellten Fall, $k_1 > k_2$, schwenkt sich der Deckelteil 1 mit einem Öffnungswinkel von ungefähr 180° in eine Lage unterhalb des Basisteiles 2.

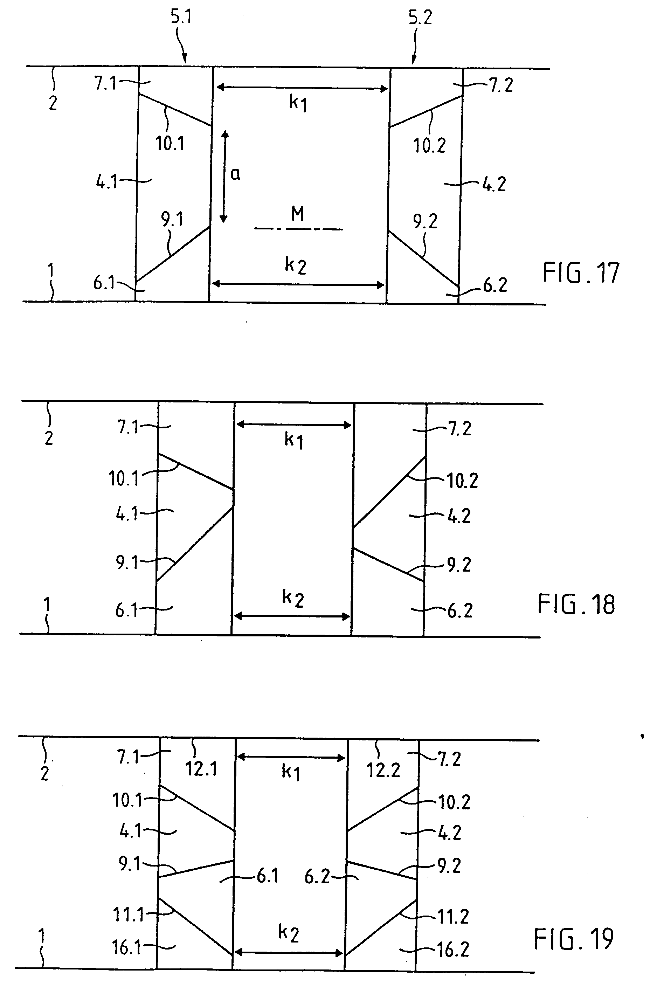

Figur 17 zeigt eine Ausführungsform mit parallel gestellten Verbindungsarmen. Die Abstände $k_1$, $k_2$ der Ansatzstellen an den beiden Elementen 1 und 2 sind gleich. Die Biegebereiche 9, 10 sind relativ weit auseinander angeordnet bzw. die Anlenkelemente 6.1, 6.2, 7.1, 7.2 weisen nur eine geringe Länge auf (fast dreiecksförmig). Beim Auf- und Zuklappen schwenkt der Deckelteil 2 mit einem deutlichen Schnappeffekt in die Höhe M und stellt sich auf einen Öffnungswinkel von ungefähr 180° ein. Ausserdem kann man beobachten, dass die Spannungsausgleichsbewegung klein ist, und die Biegebereiche 9, 10 leicht unter Spannung bleiben. Dies kann für gewisse Anwendungen genau richtig sein, nämlich dort, wo der Deckelteil z.B. in Bewegung nicht wippen soll. Ein grosser Abstand a zwischen den Biegebereiche 9, 10 ist besonders auch dann vorteilhaft, wenn die Scharnierteile in einer 180°-Offenstellung voneinander distanzierte sein sollen. Damit kann selbstverständlich auch der für Spritzgiesswerkzeug erforderliche Abstand in der Spritzposition beeinflusst werden.

Figur 18 zeigt eine Ausführungsform mit parallel gestellten Verbindungsarmen ($k_1=k_2$) und mit einer asymmetrischen Ausgestaltung der Anlenkelemente 6, 7 bzw. asymmetrischen Anlage der Biegebereiche 9, 10 (verschiedene Neigung der Verbindungen (vgl. Asymmetrie bezüglich $\sigma_1$, vgl. Fig. 7), nämlich verschiedene Winkeln an einem Verbindungsarm und verschiedene Höhen der Trapeze zu den Verbindungsarmen. Beim Auf- und Zuklappen schwenkt der Deckelteil 2 mit einem deutlichen Schnappeffekt in eine zum Basisteil windschiefe Lage. Die Bewegung erfolgt um eine zur Ver schlussebene (vgl. Fig. 1) geneigte Achse. Mit dieser Ausführungsform soll nur die Vielfalt und die Möglichkeiten gezeigt werden, welche die erfinderische Lösung bietet.

Alle Ausführungsformen von Figur 14 bis 18 zeigen Varianten der Basisform mit zwei zueinander geneigten Verbindungsstellen oder Biegebereichen 9, 10, um den gewünschten Schnappeffekt ohne Überdehnung des Materials zu erhalten. Der Öffnungswinkel kann durch die Erfindung jedoch zusätzlich und wesentlich vergrössert werden, wenn eine oder mehrere Verbindungsstellen oder Biegebereiche 11.1, 11.2, 12.1, 12.2 vorgesehen werden. Je nach Material und/oder Konstruktion der zu verbindenden Teile (Deckel/Gefäss) sind die Ansatzstellen bzw. Anlenkelemente 6, 7 besonders starr ausgebildet, so dass die "Öffnungsmithilfe" praktisch wegfällt. Es ist dann vorteilhaft, solch eine oder zwei weitere Biegebereiche bzw. Scharnierstelle(n) einzubringen. Diese können lediglich Biegefunktion haben oder aber auch eine zusätzliche Schnappfunktion aufweisen.

Figur 19 zeigt eine besondere Ausführungsform mit einem zusätzlichen, geneigten Biegebereich in der Nähe eines Scharnierteils, hier des Verschlusskörpers 1. Die Abstände k1, k2 der Ansatzstellen an den beiden Elementen 1 und 2 sind gleich. Die Biegebereiche 9, 10 sind analog wie bei anderen Ausführungsformen angeordnet. Der zusätzliche Biegebereich wird durch linienhafte Biegebereiche 11.1, 11.2 gebildet, welche die Anlenkelemente 6.1, 6.2 mit Ansätzen 16.1, 16.2 des Verschlusskörpers 1 verbinden. Des weiteren sind zusätzliche Biegebereiche 12.1, 12.2 vorgesehen, welche die oberen Anlenkelemente 7.1, 7.2 mit dem Verschlussdeckel 2 verbinden. Die Ansätze 16.1, 16.2 sind starr mit dem Verschlusskörper 1 verbunden. Die zusätzlichen Biegebereiche 11.1, 11.2 sind so geneigt, dass sie die anhand von Fig. 11 erläuterte Entlastungsbewegung A ausführen können. Die Anordnung der Verbindungen bzw. Biegebereiche 9, 10, 11 kann mit einer Z-Form verglichen werden, d.h. die Linien weisen abwechselnd eine positive oder negative Neigung gegenüber den Kanten der Verbindungsarme 5 auf. Wird die Steigung der zusätzlichen Biegbereiche 11.1, 11.2 relativ gross gewählt (>45°, wie bspw. in Figur 19 dargestellt), so besitzt das Scharnier eine zusätzliche Rastpostion. Beim Auf- und Zuklappen schwenkt der Verschlussdeckel 2 mit einem Schnappeffekt ähnlich wie bei den erläuterten Beispielen zuerst um die Biegebereiche 9, 10 auf und stellt sich auf einen ersten Öffnungswinkel von ca 180° ein. Wird der Deckel nun durch zusätzliche manuelle Krafteinwirkung weiter betätigt, so tritt ein zweiter Schnappeffekt im wesentlichen um die Biegebereiche 11.1, 11.2 auf und bringt den Verschlussdeckel in eine zweite Öffnungsposition von ca. 270°. Die Erfindung ermöglicht damit drei stabile Lagen des Verschlussdeckels. Damit erlaubt die Erfindung in völlig neuartiger Weise eine tri- oder (bei zusätzlichen Biegebereichen) mehrstabile Scharnierverbindung, was bisher durch kein bekanntes Scharnier gemäss dem Stand der Technik ermöglicht wird.

Werden die Verbindungsarme durch nur schwach geneigte oder horizontale zusätzliche Biegebereiche 11.1, 11.2 über Ansätze 16.1, 16.2 oder direkt an den Übergängen mit den Scharnierteilen verbunden, so entsteht eine bistabile Öffnungsbewegung, bei der die Entlastung durch Neigung der Anlenkelemente 6.1, 6.2, 7.1, 7.2 gegen aussen erfolgt (vgl. z.B. Fig. 10). Wie sich zeigt, wird bei Ausführungsformen mit Ansätzen 16.1, 16.2 die Spannungsausgleichsbewegung nicht nachteilig beeinträchtigt und die Biegebereiche 9, 10, 11 sind weitgehend spannungsfrei.

Die Neigung der Biegebereiche 9, 10 bzw. zusätzlicher Biegebereiche 11, 12 wird erfindungsgemäss gezielt eingesetzt, um den Bewegungsablauf im Sinne einer sanften Steuerung zu beeinflussen und dadurch vorteilhafte Öffnungsbewegungen zu erhalten. Gleichzeitig ist die gegenseitige Anordnung der Verbindungsarme 5 zu berücksichtigen. Da die Scharnierbewegung sowohl von der Neigung der Biegebereiche als auch von der gegenseitigen Anordnung der Verbindungsarme 5 abhängt, werden diese Parameter vorzugsweise koordiniert.

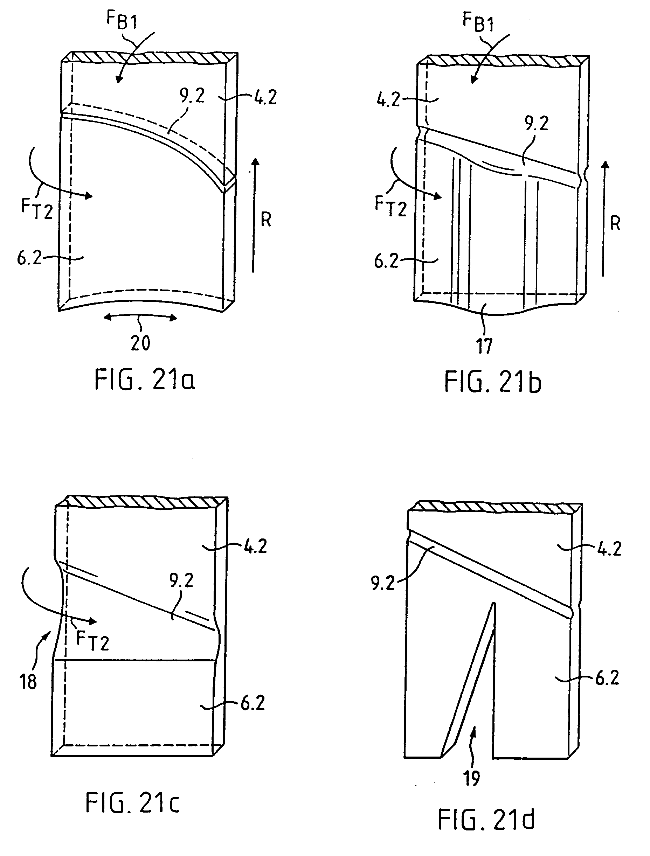

Die Bedeutung dieser Parameter soll anhand von Figur 20 erläutert werden. Diese Figur zeigt wiederum schematisch zwei an einem runden Verschlusskörper 1 angeordnete Verbindungsarme 5.1, 5.2. Die hier flach (ohne Dicke) dargestellten Verbindungsarme schliessen zusammen einen Winkel $\alpha$ ein. Zwei zu den Verbindungsarmen senkrechte Linien durch die Achse des Verschlusskörpers schliessen einen Winkel $\omega = 180°-\alpha$ ein. Die Biegebereiche 9.1, 10.1 bzw. 9.2, 10.2 schliessen je einen Winkel $\Phi$ ein. Es lässt sich leicht zeigen, dass der theoretisch erzielte Öffnungswinkel vom gegenseitigen Verhältnis der beiden Winkel $\omega$ und $\Phi$ abhängig ist. Mittels trigonometrischer Berechnung lässt sich zeigen, dass bei starr senkrecht zu den Verschlussteilen angeordneten Anlenkelementen 6, 7 zur Erreichung eines theoretischen Öffnungswinkels von 180° (unter Vernachlässigung von Materialeinflüssen) folgende Bedingung erfüllt sein muss: $\tan \Phi/2 = \cos \alpha/2 = \cos (180-\omega)/2$ . Für $\omega = 90°$ wäre somit bspw. ein Winkel $\Phi = 70.5°$ erforderlich. Wie bereits weiter oben erläutert wurde, kann ein wesentlich grösserer Öffnungswinkel erreicht werden, wenn zusätzliche Biegebereiche 11, 12 vorgesehen werden, welche einen spannungsfreien Zustand in der geöffneten Position erlauben.

Bei einer Öffnungsbewegung in Richtung des Pfeiles B treten, wie bereits erläutert, Biege- und Torsionskräfte auf. Relevant sind hier die Torsionskräfte $F_{T1}$ und $F_{T2}$ sowie die Biegekraft $F_{B1}$ auf die unteren Anlenkelemente 6.1, 6.2 sowie die Torsions- und Biegekräfte $F_{T3}$, $F_{T4}$, $F_{B1}$ auf die oberen Anlenkelemente 7.1, 7.2. Diese Kräfte sind gleich, wenn die Anlenkelemente 6, 7 eine entsprechende Form aufweisen, d.h. die Biegebereiche 9.1, 10.1 und 9.2, 10.2 symmetrisch unter gleichem Winkel $\lambda_1$ und $\lambda_2$ an den Verbindungsarmen 5.1, 5.2 angeordnet sind. Wie aus Figur 20 ersichtlich ist, besitzen hier die unteren Biegebereiche 9.1, 9.2 bevorzugterweise einen grösseren Winkel $\lambda_1$ als die oberen Biegebereiche 10.1, 10.2. Dies führt dazu, dass die entsprechenden Kräfte $F_{T1}$, $F_{T2}$ und $F_{B1}$, welche auf die unteren Anlenkelemente 6.1, 6.2 wir-ken, geringer sind als die entsprechenden Kräfte $F_{T3}$, $F_{T4}$ und $F_{B2}$, welche bei den oberen Anlenkelementen 7.1, 7.2 auftreten. In der Folge wird bei einem Öffnungvorgang nicht ein gleichzeitiges Umbiegen in den Biegebereichen 9, 10 erreicht, sondern die Verbindungsarme 5.1, 5.2 bewegen sich zuerst um die Biegebereiche 9.1, 9.2 und erst nachher um die Biegebereiche 10.1, 10.2. Dies wird erfindungsgemäss gezielt dazu benützt, um den Bewegungsablauf während des Öffnungs- und Schliessvorgangs zu beeinflussen. Beim Ausführungsbeispiel gemäss Figur 20 wird beispielsweise erreicht, dass der obere (hier nicht dargestellte) Verschlussdeckel zuerst eine Schwenkbewegung im wesentlichen auf Höhe der Markierung $M_1$ gegen aussen ausführt und erst mit Verzögerung eine zusätzliche Schwenkbewegung im Bereich der Markierung $M_2$. Der erfinderische Gedanke der Steuerung des Bewegungsablaufs unter gleichzeitiger Reduktion der Dehnungskräfte durch Kooperation von Materialeigenschaften wird anhand von Figur 20 besonders deutlich.

Die Wahl der Winkel $\lambda_1$ und $\lambda_2$ sowie der Abstand a der Biegebereiche 9, 10 lässt einen breiten Steuerbereich für die Kinematik des Scharniers offen. Besonders vorteilhaft sind Anordnungen der Biegebereiche 9, 10, bei denen die Achsen der über das Kreuz stehenden Bewegungsbereiche möglichst windschief stehen. Insbesondere sollen die kreuzweise stehenden Biegebereiche 9.1 und 10.2 bzw. die Biegebereiche 9.2 und 10.1 möglichst nicht parallel und möglichst in Achsrichtung versetzt sein. Dadurch kann erreicht werden, dass das Gesamtverhalten des Scharniers gegen Verdrehungen der Verschlussteile (an sich unerwünschte Torsionskräfte) möglichst stabil ist.

Anhand der Figuren 21a-21d sollen zusätzliche Möglichkeiten zur Beeinflussung der Bewegungsvorgänge und weitere Anordnungsbeispiele der funktionalen Elemente beschrieben werden. Die erfindungsgemässe Materialkooperation kann durch zusätzliche konstruktive Merkmale unterstützt bzw. beeinflusst werden. Figur 21a zeigt ein unteres Anlenkelement 6.2, das eine leichte Wölbung 20 quer zur Längsrichtung R aufweist. In einer bevorzugten Ausführung entspricht diese Wölbung der örtlichen Krümmung des Verschlussteils. Der schräg zur Längsrichtung angeordnete Biegebereich 9.2 besitzt vorzugsweise eine geradlinige Form, kann jedoch für besondere Ausführungen gekrümmt sein oder einen nichtlinearen Verlauf zeigen. Das Zwischenteil 4.2 besitzt hier ebenfalls eine dem Anlenkelement 6.2 entsprechende Wölbung 20. Wird die Verbindung 9.2 als Filmscharnier ausgebildet, so ist unterscheidet sich das Bewegungsverhalten gegenuber der weiter oben beschriebenen Ausführungsformen im wesentlichen nur aufgrund der Wölbung des Anlenkelementes 6.2. Die Wölbung 20 führt dazu, dass das Anlenkelement eine Versteifung gegenüber Biegekräften $F_{B1}$ erfährt. Gegenüber Torsionskräften $F_{T2}$ besteht jedoch ein geringerer Widerstand, so dass die gewünschte Dehnungs-Entlastung durch eine Schwenkbewegung im wesentlichen in Richtung des Pfeiles $F_{T2}$ erzielt wird. Wird die Verbindung 9.2 durch eine elastische Materialverbindung erzielt, so wird der Bewegungsvorgang zusätzlich durch einen dreidimensionalen Umstülpvorgang der gewölbten Teile 6.2, 4.2 überlagert. Der Schnappeffekt kann dadurch zusätzlich erhöht werden.

Figur 21b zeigt ein Anlenkelement 6.2, das über ein Filmscharnier 9.2 mit dem zwischenteil 4.2 verbunden ist. Das Anlenkelement weist hier eine geradlinige, flache Form auf, ist jedoch im Mittenbereich durch eine in Längsrichtung R verlaufende Rippe 17 verstärkt. Diese Rippe 17 führt zu einer Materialverstärkung und zu einer entsprechenden Versteifung des Anlenkelementes 6.2 in Längsrichtung. Entsprechend kann auch durch mehrere, schmalere Rippen eine Versteifung in Längsrichtung erreicht werden. Analog können Rippen oder Materialverstärkungen vorgesehen werden, welche eine Versteifung quer zur Längsrichtung R bewirken. Diesfalls werden Torsionsbewegungen des Anlenkelementes 6.2 quer zur Längsrichtung R weitgehend unterdrückt und das Anlenkelement 6.2 wird vor allem Biegebewegungen in Richtung des Pfeiles $F_{B1}$ ausführen. Selbstverständlich können solche Versteifungen in Kombi-nation mit zusätzlichen Biegebereichen 11, 12 (vgl. z.B. Fig. 19) verwendet werden.

Figur 21c zeigt ein Ausführungsbeispiel, bei welchem das Anlenkelement 6.2 über ein Filmscharnier 9.2 mit dem Zwischenteil 4.2 verbunden ist. Um Torsions- und Biegekräfte über das Anlenkelement 6.2 aufnehmen zu können, ist hier im oberen Bereich 18 des Anlenkelementes eine Materialverdünnung vorgesehen. Damit das Anlenkelement 6.2 eine genügende Gesamtfestigkeit besitzt, wird die Materialverdünnung vorzugsweise nicht über die gesamte Breite des Anlenkelementes, sondern dort vor-gesehen, wo die Torsions- und Biegekräfte am grössten sind. Dadurch werden die zur Dehnung-Entlastung erforderlichen Kräfte und Momente durch bestimmte Bereiche des Anlenkelementes gezielt aufgenommen. Der Biegebereich 9.2 ist dabei so auszugestalten, dass nur ein definierter Bereich für die eigentliche Umbiegung des Verbindungsarmes benützt wird. Dies wird erreicht, indem der Übergang von der Materialverdünnung im Bereich 18 zur Verbindung 9.2 einen Materialstärkesprung aufweist.

Figur 21d zeigt schliesslich ein Ausführungsbeispiel bei dem das Anlenkelement 6.2 eine Materialausnehmung 19 besitzt bzw. das Anlenkelement aus zwei Teilen besteht. Solche Ausführungsformen sind insbesondere bei grösseren Scharnieren geeignet, um die nötige Biegeelastizität herbeizuführen. Die Ausnehmungen werden dabei so angeordnet, dass die kraftübertragenden Bereiche nicht oder nur im gewünschten Ausmass beeinflusst werden. Die Ausnehmungen können dabei wie in dieser Ausführungsform nur einen Teil des Anlenkelemente 6 erfassen oder bis zu den Biegebereichen 9 reichen. Selbstverständlich können auch die Zwischenteile 4.2 beispielsweise aus ästhetischen Gründen, zwecks Materialersparnis oder zur Beeinflussung der Scharnierkinematik entsprechende Materialausnehmungen aufweisen. Es ist jedoch darauf zu achten, dass eine gewisse Steifigkeit der Zwischenteile 4 erhalten bleibt, damit der erfindungsgemässe Bewegungsablauf gewährleistet ist und nicht unkoordinierte Stülpeffekte auftreten. In einer besonderen Ausführungsform ist es möglich, unter Beibehaltung der Biegesteifigkeit der Zwischenteile 4 den Schnappeffekt durch eine Torsions-Federwirkung der Zwischenteile 4 zu erhöhen. Die Zwischenteile werden demgemäss so ausgebildet, dass sie in Längsrichtung im Verhältnis zu den Anlenkelementen 6, 7 biegesteif sind und kein Ausknicken ermöglichen. In Querrichtung zu den Verbindungsarmen 5 werden, beispielsweise durch eine lamellen- oder rippenartige Ausgestaltung, die Zwischenteile 4 derart ausgebildet, dass sie in dieser Richtung als Torsionsfeder wirken. Damit unterstützt das Torsionsmoment der Zwischenteile 4 die durch die Anlenkelemente bewirkte Federkraft beim Betätigen der Scharnieranordnung.

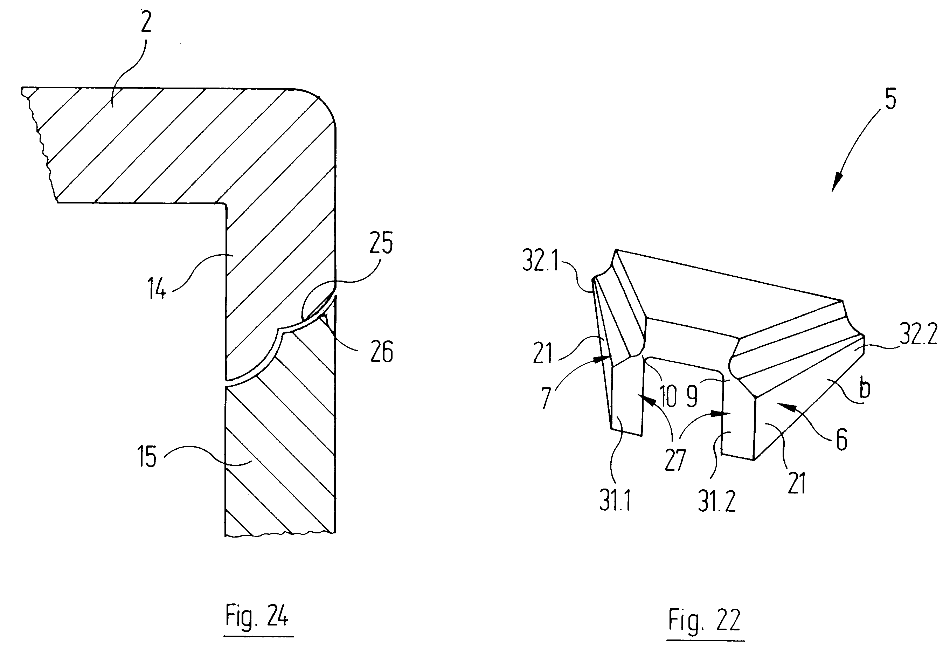

Figur 22 zeigt eine detaillierte Ansicht eines Verbindungsarmes 5 bei dem wie bei dem Ausführungsbeispiel nach Figur 20 die Anlenkelemente 6, 7 starr und senkrecht zu den Verschlussteilen angeordnet sind. Der dadurch bei einer 180° geöffneten Stellung der hier nicht dargestellten Scharnierteile resultierende Brückenbogen zeigt dann die vorliegende Form. Der durch die Biegebereiche eingeschlossene Winkel Φ ist erfindungsgemäss so gewählt, dass sich der Verbindungsarm in dieser 180° geöffneten BrückenbogenStellung, insbesondere die Anlenkelemente 6, 7, in einem spannungsfreien Zustand befindet. In diesem Ausführungsbeispiel besitzen die Anlenkelemente eine weitere besonders bevorzugte Form. Die Wandstärke der Anlenkelemente wird von den frontal sichtbaren Druckkanten 31.1, 31.2 bis zu den in dieser Figur hinten liegenden Zugkanten 32.1, 32.2 verjüngt. Durch dieses Mittel wird erreicht, dass Biege- und Torsionseigenschaften der Anlenkelemente über die gesamte Breite b gleichmässig bestimmt werden können. Die Wandstärke wird vorzugsweise derart ausgebildet, dass die über einen finiten Bereich entlang der Breite b entstehenden Biege- und Torsionseigenschaften möglichst gleichmässig sind. In einer Näherung wird die Wandstärke kontinuierlich verjüngt, wobei die Wandstärken an den Druckkanten 31.1, 31.2 zu den Wandstärken an den Zugkanten 32.1, 32.2 das gleiche Verhältnis bilden wie die Höhen der Zug- und Druckkanten zueinander. Wenn die Aussenfläche 27 des Verbindungsarmes 5 der Aussenkontur eines Verschlusses angepasst ist, beispielsweise in einer Zylinderfläche liegt, so kann die Innenseite 21 der Anlenkelemente dieser Aussenkontur angepasst sein oder aber wie im dargestellten Ausführungsbeispiel in einer ebenen Fläche verlaufen.

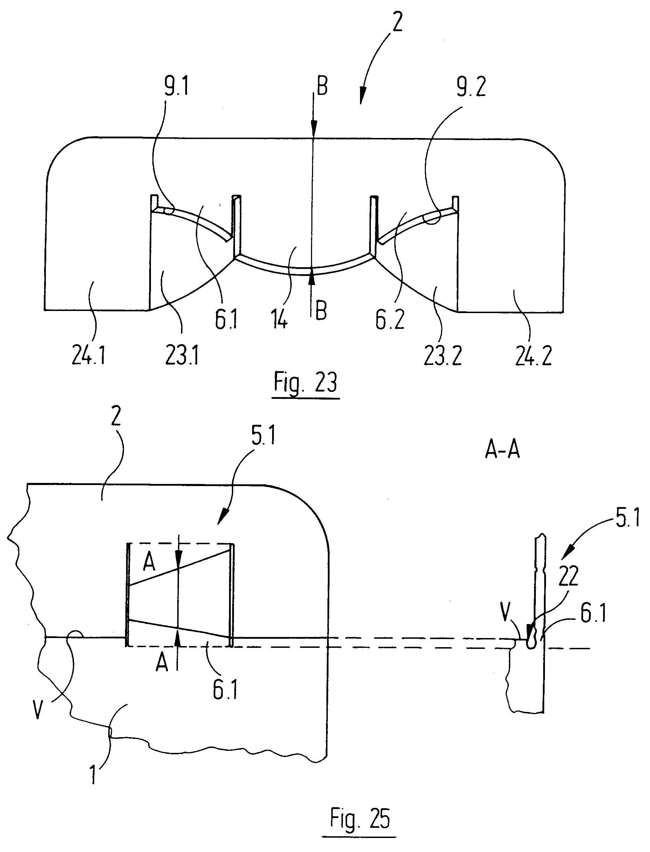

Figur 23 zeigt eine bevorzugte Ausführungsform für eine Abdichtung des Scharnierbereichs. Dargestellt ist ein Verschlussdeckel 2 mit zwei starr, senkrecht auf dem Verschlussteil 2 angeordneten Anlenkelementen 6.1, 6.2. Der Übersichtlichkeit halber sind die übrigen Bereiche der Verbindungsarme, d.h. die Zwischenteile und die Anlenkelemente, die mit dem anderen Verschlussteil verbunden sind, nicht dargestellt. Das Anlenkelement wurde also an den Biegebereichen 9.1, 9.2 durchtrennt. Der Verschlussdeckel besitzt einen runden Querschnitt, d.h. die Anlenkelemente 6.1, 6.2 liegen hier in der entsprechenden Zylinderwand. Zwischen den Anlenkelementen ist ein Steg 14 erkennbar, der hier wandförmig als Teil der Zylinderwand ausgebildet ist und innerhalb der Aussenkontur des Verschlusses liegt. Mit dem Steg 14 sind zwei dünne Wände oder Membrane 23.1, 23.2 verbunden, die diesen wiederum mit den äusseren Bereichen 24.1, 24.2 der Zylinderwand des Verschlusses verbinden. Der untere Verschlussteil bzw. Verschlusskörper kann in ähnlicher Weise mit Membranen ausgestattet sein, so dass über Steg 14 und Membrane eine staubdichte Verbindung im Scharnierbereich erzielt wird. Die Grösse der Membrane beider Verschlussteile wird vorzugsweise so ausgebildet, dass sich diese berühren oder überlappen. Anstelle von Membranen 23.1, 23.2, die zwischen Steg 14 und Bereichen 24.1, 24.2 der Ver schlusswand angeordnet sind, können erfindungsgemäss auch durchgehende Membrane zwischen den Bereichen 24.1, 24.2 vorgesehen werden. Von Bedeutung ist, dass diese Membrane die Funktionalität der Anlenkelemente nicht nachteilig beeinflussen, d.h. die erfindungsgemässe Entlastungsbewegung nicht verhindern.

Figur 24 zeigt einen Schnitt durch den Steg 14 des Ausführungsbeispiels gemäss Figur 23 entlang der Schnittlinie B-B. Der in dieser Figur 24 nicht gezeigte Verschlusskörper besitzt einen entsprechenden Steg 15, der gegen oben ragt. Um eine möglichst dichte Verbindung zwischen den Verbindungsarmen zu erreichen, überlappen sich die beiden Stege 14 und 15. Wie aus der Figur ersichtlich ist, besitzt der Steg 15 im Querschnitt eine Abschlusskante 26, welche der Abschlusskante 25 des Stegs 14 entspricht. Damit die Verschlusskinematik nicht durch die überlappenden Stege behindert wird, wird erfindungsgemäss vorgesehen, dass die Abschlusskante des Stegs 15 im Querschnitt im wesentlichen eine konkave und diejenige des Verschlussdeckels, der ja gegen aussen geklappt wird, eine im wesentlichen konvexe Form besitzt, um eine möglichst gute Führung und Dichtung zu erzielen. Selbstverständlich ist es auch möglich, im Querschnitt geradlinige Abschlusskanten für beide Stege vorzusehen.

Um eine niedere Bauhöhe des Verschlusses erreichen zu können, ist es vorteilhaft, die Anlenkelemente des Verschlusskörpers 1 nicht auf der Schliessebene V anzusetzen, sondern in Längsrichtung entlang der Mantellinien des Verschlusses nach unten zu versetzen. Diese Massnahme ist in Figur 25 veranschaulicht. Das Anlenkelement 6.1 eines Verbindungsarmes 5.1 ist (teilweise) unterhalb der Verschlussebene V angeordnet. Der Querschnitt A-A durch den Verbindungsarm zeigt deutlich, dass auf diese Weise die Anlenkelemente mittels einer Hinterkerbung 22 gebildet werden, damit die Anlenkelemente 6 erfindungsgemäss beweglich vorstehen können, um die Entlastungsbewegung auszuführen. In entsprechender Weise ist es möglich, die Verbindungsarme 5 noch weiter nach unten zu verschieben und weitgehend vollständig in den Verschlusskörper zu integrieren. Dadurch wird es möglich, einen Verschlussdeckel bzw. einen Scharnierteil mit minimalster Bauhöhe zu realisieren und diesen z.B. als flache Platte zu gestalten.

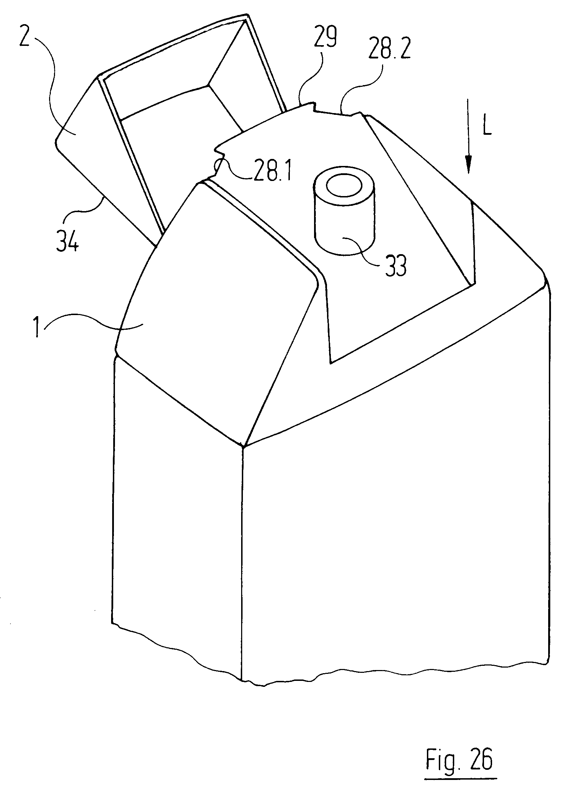

Figur 26 zeigt ein Ausführungsbeispiel mit einer in den Verschlusskörper 1 integrierten Scharnieranordnung. Die in dieser Figur nicht sichtbaren Verbindungsarme liegen im geschlossenen Zustand des Verschlusses innerhalb der Aussenkontur des Verschlusses und werden durch Ausnehmungen 28.1, 28.2 aufgenommen. An der Verbindungsstelle zwischen Verbindungsarm und dem Verschlussdeckel 2 besitzt letzterer eine nur sehr geringe, minimale Höhe bzw. Wandstärke. Wie in dieser Darstellung besonders gut ersichtlich ist, erlaubt die Scharnieranordnung in dieser annähernd 180° geöffneten Stellung des Verschlussdeckels 2, diesen weit nach hinten und unten zu verschwenken. Der Verschlussdeckel liegt in Längsrichtung L des Verschlusses somit unterhalb der oberen Kante 29 des Verschlusskörpers und erlaubt einen unbehinderten Zugang zur Ausgussöffnung 33. Der Verschluss gemäss diesem Ausführungsbeispiel erlaubt auch, bei Vorsehen mehrerer Schwenkpositionen, eine Öffnung von bis zu 270°. Der Verschlussdeckel berührt dann mit seiner hinteren Kante 34 die Aussenfläche des hier dargestellten Behälters.

Es ist ohne weiteres erkennbar, dass die Biegebereiche 9, 10 bzw. die zusätzlichen Biegebereiche 11, 12 nicht in einer engen Begriffsbedeutung verstanden werden dürfen. Vielmehr ist es für die erfindungsgemässe Scharnierbewegung von Bedeutung, dass die Biegesteifigkeit in diesen Biegebereichen sich von der Steifigkeit der Anlenkelemente, Zwischenteile, etc. klar unterscheidet und ein definiertes Umbiegen der Verbindungsarme 5 in flächen- oder linienhaften Biegebereichen 9, 10, 11, 12 herbeiführt (Konzentration der Umbiegeeffekte). Die übrigen Teile der Verbindungsarme 5 sollen demgegenüber nur geringfügig elastisch beansprucht werden, um die erfindungsgemässen Dehnungsentlastung herbeizuführen. Dadurch ist gewährleistet, dass das Scharnier eine gezielte Schwenkbewegung ausführt und nicht undefinierte Umstülpvorgänge ("Taumelbewegungen") entstehen. Beispielsweise kann durch Verwendung verschiedener Materialien (unterschiedliche Elastizitätsmodule) für Biege- und Zwischenbereiche die erfindungsgemässe Lösung äquivalent erreicht werden. In gleicher Weise kann z.B. durch Versteifung der Zwischenbereiche (z.B. durch Rippen oder besondere Formgebung) die erforderliche Wirkung erreicht und die erforderliche Entlastungsbewegung erzielt werden. Da in den Figuren in erster Linie Ausführungsbeispiele mit Filmscharnieren dargestellt sind, wurden die Biegebereiche 9, 10, 11, 12 nur schmal dargestellt. Wenn die Biegebereiche anderweitig realisiert werden, beispielsweise Materialien mit hoher Biegeelastizität, so sind die Biegebereiche entsprechend breiter. Insbesondere aus den Figuren 9 und 10 kann auch erkannt werden, dass die Biegebereiche 9, 10 in der Regel grössere Umbiegungen erfahren als etwaig vorhandene zusätzliche Biegebereiche 11, 12. Die verschiedenen Biegebereiche müssen daher nicht identische Biegeeigenschaften aufweisen, sondern können bei Bedarf entsprechend ihrer Beanspruchung optimierte Charakteristiken aufweisen.

Für besondere Anwendungen sind auch gemischte Ausführungsformen mit einem Biegebereich 12 ohne Schnappeffekt auf der Deckelseite und einen weiteren Biegebereich 11 beim Verschlusskörper denkbar. Der erfinderische Gedanke umfasst selbstverständlich auch Lösungen, bei denen die Anlenkelemente zusätzliche Verbindungen (z.B. radiale oder seitliche Stützstreben) mit den Scharnierteilen besitzen, solange die erforderliche Dehnungs-Entlastungsbewegung für die Zwischenteile 4 gewährleistet ist.

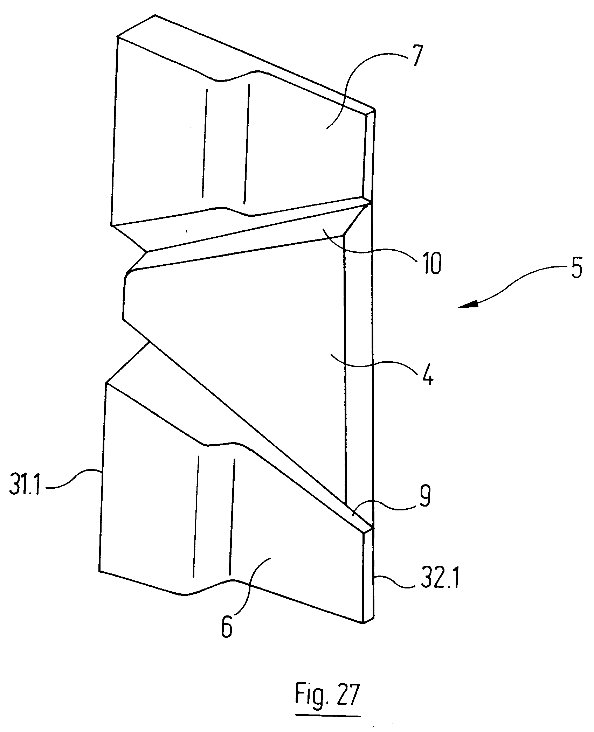

Anhand der Figuren 27 bis 29 sollen weitere Ausführungsformen der Erfindung näher beschrieben werden, welche das bereits weiter oben erläuterte, quer zu den Verbindungsarmen erzeugte Zug-/Druck-Profil in optimierter Weise nutzen. Der Schnappeffekt des Verschlusses wird erfindungsgemäss durch die elastischen Verformungen bzw. die Federwirkung und das Zusammenwirken der Elemente der Verbindungsarme 5, d.h. der Anlenkelemente 6, 7 sowie des Zwischenelementes 4 bewirkt. Beim Öffnen (und Schliessen) des Verschlusses entstehen aufgrund der Anordnung und Ausgestaltung dieser Elemente 4, 6, 7 gemäss der Erfindung die für den Schnappeffekt entscheidenden Beanspruchungen. Wie anhand der Figuren 13 und 20 beschrieben wurde, entstehen auf die Anlenkelemente 6, 7 wirkende Torsionsbeanspruchungen um die Längsachse jedes Verbindungsarmes 5. Entlang der kürzeren Seite der Anlenkelemente, an der Zugkante 32.1, wird ein Zugbereich und entlang der längeren Seite der Anlenkelemente, an den Druckkanten 31.1, ein Druckbereich aufgebaut (Längsbeanspruchung). Funktionsbedingt sind diese Zug- bzw. Druckbeanspruchungen an diesen Aussenkanten 31.1, 32.1 der Verbindungsarme 5 am grössten. Die Torsions- und Längsbeanspruchungen sind miteinander gekoppelt und werden von einer Linienlast, die an den Biegebereichen 9, 10 in die Zwischenelemente 4 eingeleitet wird, aufgebaut. Dieser Belastungsvorgang lässt sich ohne weiteres verstehen, wenn eine vektorielle Betrachtung vorgenommen wird und die Kräfte entlang der Linienlast als Komponenten von Torsions- und Zug-/Druckkräften aufgefasst werden.

Bei der Betrachtung des Kräftegleichgewichts lässt sich des weiteren erkennen, dass hier die Zwischenelemente 4 im wesentlichen nur durch Kräfte in Richtung der Längsachse des Verbindungsarme belastet sind und bei Betätigung des Verschlusses die weiter oben beschriebenen Zug- und Druckbereiche aufweisen, wobei die Zugkräfte vornehmlich an der längeren Seitenkante des Zwischenelementes 4, an der Zugkante 32.1, und die Druckkräfte an der kürzeren Kante, an der Druckkante 31.1, auftreten. Wie aus den Figuren 27-29 ersichtlich ist, werden diese Längskräfte von den Biegebereichen 9, 10 exzentrisch in das Zwischenelement 4 eingeleitet, d.h. die Filmscharniere setzen in diesen Ausgestaltungen im Bereich der hier nicht sichtbaren Aussenfläche der Zwischenelemente 4 an. Aufgrund von solchen Exzentritäten kann eine sekundäre Biegung auf den Druckseiten der Zwischenelemente 4 auftreten, die jedoch erfindungsgemäss weitgehend vermieden wird. Die erfindungsgemässe, biegesteife Ausgestaltung der Zwischenelemente 4 ist daher von Bedeutung.

In Figur 27 ist eine besonders vorteilhafte Ausführungsform der Anlenkelemente dargestellt, welche die Zug-/Druckverhältnisse gut ausnutzt. Die Anlenkelemente 6, 7 sind spiegelbildlich ausgebildet und führen somit symmetriebedingt zu gleichen Beanspruchungen. Die als Federelemente wirkenden Anlenkelemente 6, 7 weisen im Druckbereich gegen die Druckkante 31.1 eine relativ massive, stegähnliche Ausgestaltung auf. Dadurch wird ein nachteiliges Ausknicken der Anlenkelemente vermieden. Die Zugbereiche der Anlenkelemente an der Zugkante 32.1 sind demgegenüber wesentlich dünner ausgeführt und können so optimal als Zug-, Biege- und Torsionsfeder wirken. Das Zwischenelement 4 ist wie bei den bisherigen Ausführungsformen mit gleichförmiger Steifigkeit ausgeführt.

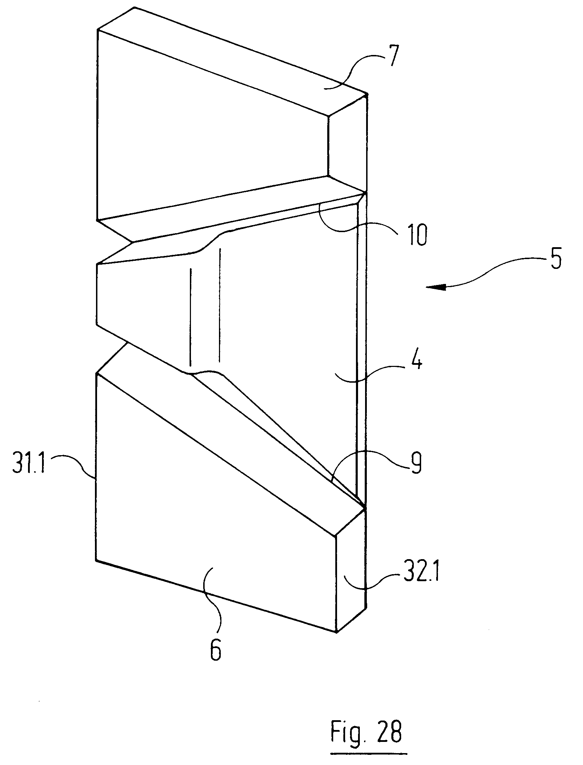

Figur 28 zeigt nun eine Ausführungsform, bei der das Zwischenelement 4 eine über die Breite der Verbindungsarme variierende Wandstärke aufweist. Hierbei ist es von Bedeutung, dass das Zwischenelement erfindungsgemäss gleichwohl als im wesentlich biegesteife Platte wirkt, d.h. dass diese Wandstärkenvariierung zu keiner Biegung der Zwischenelemente beim Betätigen des Scharniers führt. Es ist gut ersichtlich, dass im Druckbereich an der Druckkante 31.1 das Zwischenelement massiv ausgestaltet ist, um ein Ausbeulen oder Biegen zu verhindern. An der längeren Kante des Zwischenelementes 4, d.h. an der Zugkante 32.1, ist die Wandstärke jedoch verjüngt, bspw. auf *[** WARNING! MISSING DATA: <CHF ALIGN=CENTRE>1<CHFBR TYPE=BAR STYLE=SINGLE>3</CHFBR></CHF> **]* oder ¼ der Wandstärke im pruckbereich, und erlaubt eine Erhöhung der Gesamtfederwirkung des Systems wobei dieser Bereich die Funktion einer Zugfeder übernimmt. Bei kleineren PP-Verschlüssen kann dieser Zugbereich z.B. als dünner Film von bspw. 0.25-0.5 mm ausgebildet sein. Es sei hier nochmals betont, dass das Zwischenelement seine Funktion als biegesteifes Element beibehält und es soll vermieden werden, dass ungewollte Biegeverformungen auftreten. Auch entlang der Zugkante 32.1 treten somit während der Betätigung des Scharniers keine Biegungen des Zwischenelementes 4 auf. Die Anlenkelemente 6, 7 weisen hier einen im wesentlichen rechteckigen Querschnitt und eine Wandstärke auf, die grösser ist als die Wandstärke des Zwischenelementes im Zugbereich bei der Zugkante 32.1 (vgl. Wandstärkenproportionen in der Figur 28).

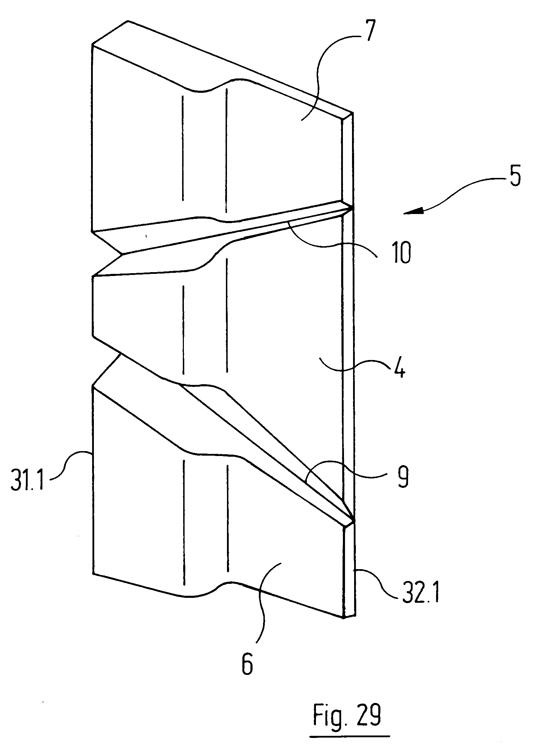

Figur 29 zeigt nun ein Ausführungsbeispiel, welches ein günstiges Federverhalten aufweist, indem es die Merkmale der Ausführungsformen gemäss den Figuren 27 und 28 einschliesst. Sowohl die Anlenkelemente 6, 7 als auch die Zwischenelemente 4 weisen im Bereich der Druckkante 31.1 eine massive wandstärke auf und vermeiden so ein Ausknicken. Demgegenüber ist der Zugbereich an der Zugkante 32.1 stark verjüngt und nimmt an der Federwirkung wie oben beschrieben teil. Die Querschnitte der Anlenkelemente 6,7 und des Zwischenelementes 4 entsprechen sich in diesem Beispiel. Auch bei dieser Ausführungsform ist es von Bedeutung, dass das Zwischenteil 4 eine Geometrie aufweist, um das Zwischenteil 4 während der Betätigung des Scharniers biegesteif zu halten. Der Übergang zwischen den verschiedenen Wandstärken kann relativ sprunghaft, über einen grösseren Bereich oder auch in Längsrichtung an verschiedenen Stellen erfolgen, je nach gewünschtem Federverhalten. Die genannten Merkmale lassen sich vorteilhaft auch mit den weiteren oben dargestellten Erfindungsmerkmalen kombinieren.

**Patentansprüche**

1. Federnde Scharnieranordnung ohne Hauptfilmscharnier mit

   a) einem ersten scharnierteil (1);
   b) einem zweiten Scharnierteil (2), welches gegenüber dem ersten Scharnierteil (1) mehrere stabile Schwenkpositionen einnehmen kann, wobei mindestens zwischen zwei stabilen Schwenkpositionen ein Totpunkt liegt, und welches aus jeder Schwenkposition zwischen zwei solchen, einen Totpunkt einschließenden stabilen Schwenkpositionen außerhalb der Totpunkte selbst elastisch federnd in die nächstbenachbarte stabile Schwenkposition zurückkehrt;
   c) zwei in Abstand voneinander angeordneten Verbindungsarmen (5), die jeweils umfassen

      ca) mindestens ein von einem Scharnierteil (1, 2) beweglich vorstehendes Anlenkelement (6, 7; 16),
      cb) mindestens ein im wesentlichen biegesteifes Zwischenteil (4), welches von zwei einen Winkel miteinander einschließenden Biegebereichen (9, 10; 11) begrenzt wird;

   dadurch gekennzeichnet, daß
   d) die Biegebereiche (9, 10; 11) an der Stelle, an der sie einander am nächsten kommen, einen Abstand derart voneinander aufweisen, daß jeder Verbindungsarm (5) sowohl in der geöffneten als auch in der Schließstellung im wesentlichen spannungsfrei ist;
   e) jedes Anlenkelement (6, 7; 16) bei der Relativverschwenkung des zweiten Scharnierteils (2) gegenüber dem ersten Scharnierteil (1) zwischen zwei stabilen, einen Totpunkt einschließenden Schwenkpositionen eine im Bereich des Totpunkts maximale elastische Entlastungsbewegung ausführt.

2. Scharnieranordnung nach Anspruch 1, dadurch gekennzeichnet, daß die Biegebereiche (9, 10; 11) an der Stelle, an der sie einander am nächsten kommen, einen Abstand derart voneinander aufweisen, daß jedes Anlenkelement (6, 7; 16) sich in der Offenstellung im wesentlichen senkrecht zur Schließebene der Scharnierteile (1, 2) erstreckt.

3. Scharnieranordnung nach Anspruch 1 oder 2, dadurch gekennzeichnet, daß der Winkel Φ, der von den Biegebereichen (9, 10) eingeschlossen ist, einen Wert aufweist, welcher der nachfolgenden Formel genügt:

$$Tan\frac{\phi}{2}=Cos\frac{\omega}{2} \cdot Cos\frac{180°-\zeta}{2}+Tan\frac{\phi}{2} \cdot Sin\frac{180°}{2}$$

wobei $\Phi$ der zwischen den Biegebereichen gebildete Winkel, $\omega$ der Winkel, der von zwei auf den Verbindungsarmen (5) senkrecht stehenden Linien gebildet wird, und $\zeta$ der effektive (wirksame) Öffnungswinkel ist.

4. Scharnieranordnung nach Anspruch 3, dadurch gekennzeichnet, daß der Winkel $\Phi$ einen Wert aufweist, welcher der nachfolgenden Formel entspricht:

$$\phi = 2 \cdot \mathrm{ArcTan}(\mathrm{Cos}\ \alpha/2)$$

wobei der Winkel $\alpha$ der durch die Verbindungsarme (5) eingeschlossene Winkel ist.

5. Scharnieranordnung nach einem der vorhergehenden Ansprüche, dadurch gekennzeichnet, daß die Biegebereiche (9, 10) ungleiche Winkel ($\lambda_1$, $\lambda_2$) gegenüber den Kanten der Verbindungsarme (5) aufweisen.

6. Scharnieranordnung nach einem der vorhergehenden Ansprüche, dadurch gekennzeichnet, daß die Verbindungsarme (5) über zusätzliche, im wesentlichen quer zu den Verbindungsarmen (5) angeordnete Biegebereiche (11, 12) mit den Scharnierteilen (1, 2) verbunden sind.

7. Scharnieranordung nach einem der vorhergehenden Ansprüche, dadurch gekennzeichnet, daß die Verbindungsarme (5) gegenüber der Schließebene der Scharnierteile (1, 2) asymmetrisch ausgebildet sind.

8. Scharnieranordung nach einem der vorhergehenden Ansprüche, dadurch gekennzeichnet, daß die Verbindungsarme (5) in einer Ebene liegend geknickt verlaufen und über einen Teil ihrer Länge hinweg parallel zueinander angeordnet sind, derart, daß sie an gegenüberliegenden Enden einen unterschiedlichen Abstand ($k_1$, $k_2$) aufweisen.

9. Scharnieranordnung nach einem der vorhergehenden Ansprüche, dadurch gekennzeichnet, daß die Dicke von mindestens einem Anlenkelement (6, 7) derart variiert, daß die Biege- und Torsionsbeanspruchungen im wesentlichen über das gesamte Anlenkelement (6, 7) hinweg gleich sind.

10. Scharnieranordnung nach Anspruch 9, dadurch gekennzeichnet, daß die Dicke des Anlenkelements (6, 7) von seiner längeren Seitenkante zu seiner kürzeren Seitenkante kontinuierlich abnimmt.

11. Scharnieranordnung nach einem der vorhergehenden Ansprüche, dadurch gekennzeichnet, daß jedes Anlenkelement (6, 7; 16) beim Verschwenken des zweiten Scharnierteiles (2) an seiner längeren Seitenkante (31) unter Zug, an seiner kürzeren Seitenkante (32) unter Druck beansprucht ist, derart, daß zwischen den beiden Seitenkanten (31, 32) ein spannungsmäßig neutraler Bereich (N) liegt.

12. Scharnieranordnung nach Anspruch 11, dadurch gekennzeichnet, daß der neutrale Bereich (N) im mittleren Drittel zwischen den beiden Seitenkanten (31, 32) liegt.

13. Scharnieranordnung nach einem der vorhergehenden Ansprüche, dadurch gekennzeichnet, daß mindestens ein Anlenkelement (6) senkrecht zu seiner Längsrichtung (R) eine Wölbung (20) aufweist.

14. Scharnieranordnung nach einem der vorhergehenden Ansprüche, dadurch gekennzeichnet, daß mindestens ein Anlenkelement (6) mindestens eine die Biegesteifigkeit verändernde Versteifungsrippe (12) aufweist.

15. Scharnieranordnung nach einem der vorhergehenden Ansprüche, dadurch gekennzeichnet, daß mindestens ein Anlenkelement (6) eine die Biegesteifigkeit verändernde Materialverdünnung (18) aufweist.

16. Scharnieranordnung nach einem der vorhergehenden Ansprüche, dadurch gekennzeichnet, daß mindestens ein Anlenkelement (6) eine die Biegesteifigkeit verändernde Ausnehmung (19) aufweist.

17. Scharnieranordnung nach Anspruch 16, dadurch gekennzeichnet, daß das Anlenkelement (6) aus zwei die Ausnehmung (19) einschließenden Teilen zusammengesetzt ist.

18. Scharnieranordnung nach einem der vorhergehenden Ansprüche, dadurch gekennzeichnet, daß mindestens ein Zwischenteil (4) in Längsrichtung der Anlenkelemente (6, 7) biegesteif, in Querrichtung hierzu jedoch als Torsionsfeder ausgebildet ist.

**19.** Scharnieranordnung nach Anspruch 18, dadurch gekennzeichnet, daß das Anlenkelement (6, 7) mit in Längsrichtung verlaufenden Lamellen oder Rippen ausgebildet ist.

**20.** Scharnieranordnung nach einem der vorhergehenden Ansprüche, dadurch gekennzeichnet, daß die Verbindungsarme (5) von außen her gesehen vor durchgehend an die Innenfläche der scharnierteile (1, 2) angeformten Membranen (23) angeordnet sind.

**21.** Scharnieranordnung nach Anspruch 20, dadurch gekennzeichnet, daß sich die Membranen (23) der beiden Scharnierteile (1, 2) in der Schließstellung berühren oder überlappen.

**22.** Scharnieranordnung nach einem der vorhergehenden Ansprüche, dadurch gekennzeichnet, daß an mindestens eines der Scharnierteile (1) zwischen den Verbindungsarmen (5) ein Steg (14, 15) angeordnet ist.

**23.** Scharnieranordnung nach Anspruch 22, dadurch gekennzeichnet, daß der Steg in der Schließstellung über die Schließebene hinaus in eine Ausnehmung des anderen Scharnierteils (2) hineinragt.

**24.** Scharnieranordnung nach Anspruch 22, dadurch gekennzeichnet, daß an beiden scharnierteilen (1, 2) zwischen den Verbindungsarmen (5) Stege (14, 15) vorgesehen sind, die einander berühren oder überlappen.

**25.** Scharnieranordnung nach einem der vorhergehenden Ansprüche, dadurch gekennzeichnet, daß die zwischen den beiden Verbindungsarmen (5) liegenden Abschlußkanten (25, 26) der beiden Scharnierteile (1, 2) sich überlappen.

**26.** Scharnieranordnung nach Anspruch 25, dadurch gekennzeichnet, daß die zwischen den beiden Verbindungsarmen (5) liegenden Abschlußkanten (25, 26) der beiden Scharnierteile (1, 2) komplementär konvex und konkav geformte Bereiche aufweisen.

**27.** Scharnieranordnung nach einem der vorhergehenden Ansprüche, dadurch gekennzeichnet, daß mindestens einer der Verbindungsarme (5) an dem zugeordneten Scharnierteil (1) unterhalb der Schließebene (V) angesetzt und von dem Scharnierteil (1) durch eine Hinterschneidung (22) abgehoben ist.

**28.** Scharnieranordnung nach einem der vorhergehenden Ansprüche, dadurch gekennzeichnet, daß die Verbindungsarme (5) an mindestens einem Scharnierteil (1) in der Schließstellung von Ausnehmungen (28) aufgenommen sind.

**29.** Scharnieranordnung nach einem der vorhergehenden Ansprüche, dadurch gekennzeichnet, daß sie bistabil ist und hierzu jeder Verbindungsarm (5) zwei innere Biegebereiche (9, 10) und ein Zwischenteil (4) aufweist.

**30.** Scharnieranordnung nach einem der Ansprüche 1 bis 28, dadurch gekennzeichnet, daß sie tristabil ist und hierzu jeder Verbindungsarm (5) drei innere Biegebereiche (9, 10, 11) mit abwechselnd positiver und negativer Neigung gegenüber den Seitenkanten der Verbindungsarme (5) aufweist.

**31.** Scharnieranordnung nach einem der vorhergehenden Ansprüche, dadurch gekennzeichnet, daß das Zwischenelement (4) im der Zugkante (32.1, 32.2) benachbarten Zugbereich einen gegenüber dem der Druckkante (31.1, 31.2) benachbarten Druckbereich reduzierte, als Zugfeder wirkende Wandstärke aufweist.

## Claims

**1.** Resilient hinge arrangement without a main film hinge, comprising

a) a first hinge part (1);
b) a second hinge part (2) which can adopt a plurality of stable pivot positions with respect to the first hinge part (1), wherein a dead centre lies at least between two stable pivot positions, and which can return resiliently to the next adjacent stable pivot position from each pivot position between such stable pivot positions, enclosing a dead centre, outside of the actual dead centres;
c) two connecting arms (5) which are disposed at a distance from one another and which each comprise

ca) at least one coupling element (6, 7; 16) protruding in a mobile manner from a hinge part (1, 2),
cb) at least one substantially rigid intermediate part (4) delimited by two bending regions (9, 10; 11) forming an angle with one another;

characterised in that

d) at the point at which they come closest to one another the bending regions (9, 10; 11) are at a distance from one another such that each connecting arm (5) is substantially stress-free both in the open and in the closed position;

e) when the second hinge part (2) pivots relative to the first hinge part (1) between two stable pivot positions, enclosing a dead centre, each coupling element (6, 7; 16) executes an elastic relieving movement which is maximal in the region of the dead centre.

2. Hinge arrangement according to claim 1, characterised in that at the point at which they come closest to one another the bending regions (9, 10; 11) are at a distance from one another such that each coupling element (6, 7; 16) extends substantially perpendicularly to the closing plane of the hinge parts (1, 2) in the open position.

3. Hinge arrangement according to claim 1 or 2, characterised in that the angle $\Phi$ formed by the bending regions (9, 10) has a value which satisfies the following formula:

$$Tan\frac{\phi}{2}=Cos\frac{\omega}{2} \cdot Cos\frac{180°-\zeta}{2}+Tan\frac{\phi}{2} \cdot Sin\frac{180°}{2}$$

wherein $\Phi$ is the angle formed between the bending regions, $\omega$ is the angle formed by two lines perpendicular to the connecting arms (5) and $\zeta$ is the effective (active) opening angle.

4. Hinge arrangement according to claim 3, characterised in that the angle $\Phi$ has a value which complies with the following formula:

$$\Phi = 2 \cdot ArcTan(Cos\ \alpha/2)$$

wherein the angle $\alpha$ is the angle formed by the connecting arms (5).

5. Hinge arrangement according to one of the preceding claims, characterised in that the bending regions (9, 10) have unequal angles ($\lambda_1$, $\lambda_2$) with respect to the edges of the connecting arms (5).

6. Hinge arrangement according to one of the preceding claims, characterised in that the connecting arms (5) are connected to the hinge parts (1, 2) via additional bending regions (11, 12) disposed substantially transversely to the connecting arms (5).

7. Hinge arrangement according to one of the preceding claims, characterised in that the connecting arms (5) are asymmetrical with respect to the closing plane of the hinge parts (1, 2).

8. Hinge arrangement according to one of the preceding claims, characterised in that the connecting arms (5) extend in a kinked manner in one plane and are disposed parallel to one another over a part of their length such that they are disposed at different distances ($k_1$, $k_2$) from one another at opposite ends.

9. Hinge arrangement according to one of the preceding claims, characterised in that the thickness of at least one coupling element (6, 7) varies such that the bending and torsional stresses are substantially equal over the entire coupling element (6, 7).

10. Hinge arrangement according to claim 9, characterised in that the thickness of the coupling element (6, 7) continuously decreases from its longer side edge to its shorter side edge.

11. Hinge arrangement according to one of the preceding claims, characterised in that when the second hinge part (2) is pivoted each coupling element (6, 7; 16) is subjected to a tensile stress at its longer side edge (31) and a compressive stress at its shorter side edge (32), such that a stress-free neutral region (N) lies between the two side edges (31, 32).

12. Hinge arrangement according to claim 11, characterised in that the neutral region (N) lies in the centre third between the two side edges (31, 32).

13. Hinge arrangement according to one of the preceding claims, characterised in that at least one coupling element (6) has an arch (20) perpendicularly to its longitudinal direction (R).

14. Hinge arrangement according to one of the preceding claims, characterised in that at least one coupling element (6) has a stiffening rib (12) which varies the bending strength.

15. Hinge arrangement according to one of the preceding claims, characterised in that the material of at least one coupling element (6) is thinned at a point (18) so as to vary the bending strength.

16. Hinge arrangement according to one of the preceding claims, characterised in that at least one coupling element (6) comprises a recess (19) which varies the bending strength.

17. Hinge arrangement according to claim 16, characterised in that the coupling element (6) is composed of two parts which enclose the recess (19).

18. Hinge arrangement according to one of the preceding claims, characterised in that at least one intermediate part (4) is rigid in the longitudinal direction of the coupling elements (6, 7), although is formed as a torsion spring in the transverse direction thereto.

19. Hinge arrangement according to claim 18, characterised in that the coupling element (6, 7) is formed with lamellae or ribs extending in the longitudinal direction.

20. Hinge arrangement according to one of the preceding claims, characterised in that, viewed from outside, the connecting arms (5) are disposed before membranes (23) moulded onto the inner surface of the hinge parts (1, 2) in a continuous manner.

21. Hinge arrangement according to claim 20, characterised in that the membranes (23) of the two hinge parts (1, 2) contact one another or overlap in the closed position.

22. Hinge arrangement according to one of the preceding claims, characterised in that a web (14, 15) is disposed between the connecting arms (5) at least at one of the hinge parts (1).

23. Hinge arrangement according to claim 22, characterised in that the web projects beyond the closing plane into a recess in the other hinge part (2) in the closed position.

24. Hinge arrangement according to claim 22, characterised in that webs (14, 15) which contact one another or overlap are provided between the connecting arms (5) at both hinge parts (1, 2).

25. Hinge arrangement according to one of the preceding claims, characterised in that the terminal edges (25, 26) of the two hinge parts (1; 2) which lie between the two connecting arms (5) overlap.

26. Hinge arrangement according to claim 25, characterised in that the terminal edges (25, 26) of the two hinge parts (1, 2) which lie between the two connecting arms (5) have regions which are shaped in complementary convex and concave fashion.

27. Hinge arrangement according to one of the preceding claims, characterised in that at least one of the connecting arms (5) starts below the closing plane (V) at the associated hinge part (1) and is raised from the hinge part (1) by an undercut (22).

28. Hinge arrangement according to one of the preceding claims, characterised in that the connecting arms (5) are accommodated by recesses (28) at least at one hinge part (1) in the closed position.

29. Hinge arrangement according to one of the preceding claims, characterised in that it is bistable and for this purpose each connecting arm (5) comprises two inner bending regions (9, 10) and an intermediate part (4).

30. Hinge arrangement according to one of claims 1 to 28, characterised in that it is tristable and for this purpose each

EP 0 746 512 B1

connecting arm (5) comprises three inner bending regions (9, 10, 11) which are inclined in an alternating positive and negative fashion with respect to the side edges of the connecting arms (5).

**31.** Hinge arrangement according to one of the preceding claims, characterised in that in the tension region which is adjacent to the tension edge (32.1, 32.2) the intermediate element (4) has a wall thickness which is reduced with respect to the compression edge (31.1, 31.2) and acts as a tension spring.

**Revendications**

**1.** Dispositif de charnière élastique sans charnière principale pelliculaire, comprenant

a) une première partie de charnière (1);
b) une seconde partie de charnière (2) capable de prendre plusieurs positions stables en pivotement ou basculement par rapport à la première partie de charnière (1), un point mort étant situé entre au moins deux positions stables en basculement, et qui retourne élastiquement à la position stable en basculement la plus proche à partir de toute position en basculement se trouvant entre deux de telles positions stables en basculement renfermant entre elles un point mort, exception faite des points morts eux-mêmes;
c) deux bras de liaison (5) disposés à distance l'un de l'autre et comportant chacun

ca) au moins un élément d'attache articulée (6,7; 16) faisant saillie d'une partie de charnière (1,2) et mobile par rapport à elle,
cb) au moins une portion intermédiaire (4) essentiellement rigide en flexion, qui est délimitée par deux zones de flexion (9, 10; 11) renfermant un angle entre elles;

caractérisé en ce que
d) les zones de flexion (9, 10; 11) présentent, à l'endroit où elles s'approchent le plus l'une de l'autre, un espacement mutuel tel que chaque bras de liaison (5) est essentiellement sans contrainte tant en position ouverte qu'en position fermée;
e) chaque élément d'attache articulée (6, 7; 16) effectue, lors du basculement relatif de la seconde partie de charnière (2) par rapport à la première partie de charnière (1) entre deux positions stables en basculement renfermant un point mort, un mouvement élastique de décharge qui est maximal dans la région du point mort.

**2.** Dispositif de charnière selon la revendication 1, caractérisé en ce que les zones de flexion (9, 10; 11), à l'endroit où elles s'approchent le plus l'une de l'autre, présentent un espacement mutuel tel que chaque élément d'attache articulée (6, 7; 16) s'étend essentiellement, en position ouverte, perpendiculairement au plan de fermeture des parties de charnières (1, 2).

**3.** Dispositif de charnière selon la revendication 1 ou 2, caractérisé en ce que l'angle $\phi$ renfermé par les zones de flexion (9, 10), présente une valeur satisfaisant la formule suivante:

$$\tan\frac{\phi}{2}=\cos\frac{\omega}{2} \cdot \cos\frac{180°\text{-}\zeta}{2}+\tan\frac{\phi}{2} \cdot \sin\frac{180°}{2}$$

où $\phi$ est l'angle formé entre les zones de flexion, $\omega$ est l'angle formé par deux lignes perpendiculaires aux bras de liaison (5), et $\zeta$ est l'angle d'ouverture effectif (efficace).

**4.** Dispositif de charnière selon la revendication 3, caractérisé en ce que l'angle $\phi$ possède une valeur correspondant à la formule suivante:

$$\phi = 2 \cdot \arctan(\cos \alpha/2)$$

où l'angle $\alpha$ est l'angle renfermé par les bras de liaison (5).

**5.** Dispositif de charnière selon une des revendications précédentes, caractérisé en ce que les zones de flexion (9, 10) présentent des angles ($\lambda_1$, $\lambda_2$) inégaux par rapport aux bords ou côtés latéraux des bras de liaison (5).

**6.** Dispositif de charnière selon une des revendications précédentes, caractérisé en ce que les bras de liaison (5) sont

EP 0 746 512 B1

reliés aux parties de charnière (1, 2) par l'intermédiaire de zones de flexion supplémentaires (11, 12) disposées pour l'essentiel transversalement aux bras de liaison (5).

7. Dispositif de charnière selon une des revendications précédentes, caractérisé en ce que les bras de liaison (5) ont une conformation asymétrique par rapport au plan de fermeture des parties de charnière (1, 2).

8. Dispositif de charnière selon une des revendications précédentes, caractérisé en ce que les bras de liaison (5), situés dans un plan, ont une forme coudée et sont disposés parallèlement entre eux sur une partie de leur longueur, de sorte qu'ils présentent des espacements ($k_1$, $k_2$) différents aux extrémités opposées.

9. Dispositif de charnière selon une des revendications précédentes, caractérisé en ce que l'épaisseur d'au moins un élément d'attache articulée (6, 7) varie de manière que les sollicitations de flexion et de torsion soient essentiellement égales sur tout l'élément d'attache articulée (6, 7).

10. Dispositif de charnière selon la revendication 9, caractérisé en ce que l'épaisseur de l'élément d'attache articulée (6, 7) diminue continûment à partir de son côté latéral plus long jusqu'à son côté latéral plus court.

11. Dispositif de charnière selon une des revendications précédentes, caractérisé en ce que chaque élément d'attache articulée (6, 7; 16), lors du basculement de la seconde partie de charnière (2), est sollicité en traction sur son côté latéral plus long (31) et en compression sur son côté latéral plus court (32), de sorte qu'une zone neutre (N), quant aux contraintes, est située entre les deux côtés latéraux (31, 32).

12. Dispositif de charnière selon la revendication 11, caractérisé en ce que la zone neutre (N) est située dans le tiers médian entre les deux côtés latéraux (31, 32).

13. Dispositif de charnière selon une des revendications précédentes, caractérisé en ce qu'au moins un élément d'attache articulée (6) présente un bombement (20) perpendiculairement à sa direction longitudinale (R).

14. Dispositif de charnière selon une des revendications précédentes, caractérisé en ce qu'au moins un élément d'attache articulée (6) présente au moins une nervure de raidissement (12) modifiant la rigidité en flexion.

15. Dispositif de charnière selon une des revendications précédentes, caractérisé en ce qu'au moins un élément d'attache articulée (6) présente un amincissement (18) du matériau constitutif, qui modifie la rigidité en flexion.

16. Dispositif de charnière selon une des revendications précédentes, caractérisé en ce qu'au moins un élément d'attache articulée (6) présente un évidement (19) modifiant la rigidité en flexion.

17. Dispositif de charnière selon la revendication 16, caractérisé en ce que l'élément d'attache articulée (6) est composé de deux parties renfermant l'évidement (19).

18. Dispositif de charnière selon une des revendications précédentes, caractérisé en ce qu'au moins une portion intermédiaire (4) est réalisée rigide en flexion dans la direction longitudinale des éléments d'attache articulée (6, 7), mais de manière à agir à la façon d'un ressort de torsion dans la direction transversale de ces éléments.

19. Dispositif de charnière selon la revendication 18, caractérisé en ce que l'élément d'attache articulée (6, 7) est réalisé avec des lamelles ou des nervures orientées dans la direction longitudinale.

20. Dispositif de charnière selon une des revendications précédentes, caractérisé en ce que les bras de liaison (5), vus de l'extérieur, sont placés devant des membranes (23) formées de façon continue sur la surface intérieure des parties de charnière (1, 2).

21. Dispositif de charnière selon la revendication 20, caractérisé en ce que les membranes (23) des deux parties de charnière (1, 2) se touchent ou se chevauchent à la position fermée.

22. Dispositif de charnière selon une des revendications précédentes, caractérisé en ce qu'une patte ou créneau (14, 15) est disposé sur au moins l'une (1) des parties de charnière entre les bras de liaison (5).

23. Dispositif de charnière selon la revendication 22, caractérisé en ce que le créneau, à la position fermée, s'étend au-delà du plan de fermeture et est engagé dans un évidement de l'autre partie de charnière (2).

24. Dispositif de charnière selon la revendication 22, caractérisé en ce que des pattes ou crénaux (14, 15), qui se touchent ou se chevauchent, sont prévus entre les bras de liaison (5) sur les deux parties de charnière (1, 2).

25. Dispositif de charnière selon une des revendications précédentes, caractérisé en ce que les bords terminaux (25, 26) situés entre les deux bras de liaison (5) des deux parties de charnière (1, 2) se chevauchent.

26. Dispositif de charnière selon la revendication 25, caractérisé en ce que les bords terminaux (25, 26) situés entre les deux bras de liaison (5) des deux parties de charnière (1, 2) présentent des zones ayant des formes convexes ou concaves complémentaires.

27. Dispositif de charnière selon une des revendications précédentes, caractérisé en ce que l'un au moins des bras de liaison (5) se raccorde à la partie de charnière (1) coordonnée au-dessous du plan de fermeture (V) et est dégagé de la partie de charnière (1) par une entaille (22) formée derrière ce bras.

28. Dispositif de charnière selon une des revendications précédentes, caractérisé en ce que les bras de liaison (5) sont reçus par des évidements (28) sur au moins une partie de charnière (1) à la position fermée.

29. Dispositif de charnière selon une des revendications précédentes, caractérisé en ce qu'il est bistable et chaque bras de liaison (5) comporte à cet effet deux zones de flexion intérieures (9, 10) et une portion intermédiaire (4).

30. Dispositif de charnière selon une des revendications 1 à 28, caractérisé en ce qu'il est "tristable" (présente trois positions stables) et chaque bras de liaison (5) comporte à cet effet trois zones de flexion intérieures (9, 10, 11) ayant alternativement une inclinaison positive et une inclinaison négative par rapport aux côtés latéraux des bras de liaison (5).

31. Dispositif de charnière selon une des revendications précédentes, caractérisé en ce que l'élément intermédiaire présente, dans la région de traction adjacente au côté tendu (32.1, 32.2), une épaisseur réduite, par rapport à la région de compression adjacente au côté comprimé (31.1, 31.2), épaisseur réduite qui agit comme un ressort de traction.

FIG. 1

FIG. 2

FIG. 3

EP 0 746 512 B1

FIG. 5

FIG. 4

FIG. 6

FIG. 7

FIG. 8

FIG. 9

FIG. 10

FIG. 11

FIG. 12

FIG. 20

FIG. 13

FIG. 14

FIG. 15

FIG. 16

FIG. 17

FIG. 18

FIG. 19

FIG. 21a

FIG. 21b

FIG. 21c

FIG. 21d

Fig. 22

Fig. 24

Fig. 23

A-A

Fig. 25

2

29

28.2

L

34

28.1

33

1

Fig. 26

Fig. 27

Fig. 28

Fig. 29